# EUROPEAN PATENT SPECIFICATION

(11) **EP 3 799 454 B1**
(45) Date of publication and mention of the grant of the patent: **14.05.2025**
(21) Application number: 20208866.2
(22) Date of filing: 15.03.2018
(51) Int. Cl.: H04W 4/80, G06F 3/16, H04R 5/033, G10L 19/22, H04L 67/12, H04L 69/40, G10L 19/02, H04W 4/14

(54) **METHOD AND ELECTRONIC DEVICE FOR TRANSMITTING AUDIO DATA TO MULTIPLE EXTERNAL DEVICES**
VERFAHREN UND ELEKTRONISCHE VORRICHTUNG ZUR ÜBERTRAGUNG VON AUDIODATEN AN MEHRERE EXTERNE VORRICHTUNGEN
PROCÉDÉ ET DISPOSITIF ÉLECTRONIQUE PERMETTANT DE TRANSMETTRE DES DONNÉES AUDIO À DE MULTIPLES DISPOSITIFS EXTERNES

(30) Priority: 24.03.2017 KR 20170037889
(43) Date of publication of application: 31.03.2021
(62) Divisional of application: 18161930.5
(73) Proprietor: Samsung Electronics Co., Ltd., Suwon-si 16677 (KR)
(72) Inventor: RYU, Kyu-Sang, 16677 Suwon-si, (KR)
(74) Representative: HGF

(56) References cited:
- EP-A1- 2 612 439
- US-A1- 2012 087 503
- US-A1- 2014 161 274
- US-A1- 2016 188 287

## Description

### BACKGROUND

### 1. Field of the Disclosure

Embodiments of the present disclosure relate to methods and electronic devices for transmitting audio data to multiple external devices.

### 2. Discussion of the Related Art

Recent wide-spread use of electronic devices supportive of short-range wireless communication, such as, for example, Bluetooth communication, is leading to a growing use of media streaming services among the electronic devices via short-range wireless communication.

For example, an electronic device supportive of Bluetooth communication may transmit audio data to an external electronic device (e.g., a headset, a speaker, earphones, or a smartphone) connected via Bluetooth communication using the advanced audio distribution profile (A2DP), and the external electronic device may receive and output the audio data. The external electronic device may control playback-related functions (e.g., play, pause, skip, volume control, and/or mute) of the playing audio data.

An electronic device supporting short-range wireless communication, such as, for example, Bluetooth communication, may be connected to multiple external devices via Bluetooth communication. When the multiple external devices use different codecs to process audio data received from the electronic device via Bluetooth communication, a problem may arise as the electronic device transmits audio data to the multiple external devices for audio streaming.

Bluetooth communication is performed within a limited frequency band, and the amount of data transmitted is limited. Thus, if the electronic device transmits audio data to each external device, the amount of data transmitted increases, resulting in possible quality deterioration (e.g., sound drops) of audio output from the external devices.

EP 2612439 A1 discusses techniques for controlling the volumes of multiple audio output devices using a collective volume control and an individual volume control for each audio output device. US 2014/161274 A1 discusses a wired and wireless headphone device and method which supports the selective attachment to an audio source of one or more additional wireless headphones.

### SUMMARY

According to aspects of the present disclosure, an electronic device and a method are provided for transmitting audio data to multiple external devices through Bluetooth communication.

The scope of protection of the present invention is defined by the appended independent claims. Optional features are specified by the dependent claims.

### BRIEF DESCRIPTION OF THE DRAWINGS

The above and other aspects, features, and advantages of the present disclosure will be more apparent from the following detailed description when taken in conjunction with the accompanying drawings, in which:
FIG. 1 is a diagram illustrating a network environment including an electronic device, according to an embodiment of the present disclosure;
FIG. 2 is a block diagram illustrating an electronic device, according to an embodiment of the present disclosure;
FIG. 3 is a block diagram illustrating a program module, according to an embodiment of the present disclosure;
FIG. 4 is a flowchart illustrating a method for transmitting audio data by an electronic device, according to an embodiment of the present disclosure;
FIG. 5 is a flowchart illustrating a method for selecting a codec to process audio data by an electronic device, according to an embodiment of the present disclosure;
FIG. 6 is a flowchart illustrating a method for operating an electronic device after deactivating an operation mode for transmitting audio data to multiple external devices, according to an embodiment of the present disclosure;
FIG. 7 is a diagram illustrating a method for transmitting audio data to multiple external devices by an electronic device, according to an embodiment of the present disclosure;
FIG. 8A is a diagram illustrating a screen for setting an operation mode to transmit audio data to multiple external devices, which is displayed on an electronic device, according to an embodiment of the present disclosure;
FIG. 8B is a diagram illustrating a home screen in a state where an operation mode for transmitting audio data to multiple external devices is activated, which is displayed on an electronic device, according to an embodiment of the present disclosure;
FIG. 8C is a diagram illustrating a standby screen and a lock screen in a state where an operation mode for transmitting audio data to multiple external devices is activated, which is displayed on an electronic device, according to an embodiment of the present disclosure;
FIG. 8D is a diagram illustrating a status bar that is expanded depending on whether an operation mode for transmitting audio data to multiple external devices is activated, which is displayed on an electronic device, according to an embodiment of the present disclosure;
FIG. 8E is a diagram illustrating a volume control screen in a state where an operation mode for transmitting audio data to multiple external devices is activated, which is displayed on an electronic device, according to an embodiment of the present disclosure;
FIG. 9 is a diagram illustrating a method for setting an operation mode for transmitting audio data to multiple external devices, according to an embodiment of the present disclosure;
FIGS. 10A and 10B are diagrams illustrating a method for setting an operation mode for transmitting audio data to multiple external devices on an electronic device, according to an embodiment of the present disclosure;
FIG. 11 is a flowchart illustrating a method for reducing the transmission speed of audio data transmitted to multiple external devices by an electronic device, according to an embodiment of the present disclosure;
FIG. 12 is a flowchart illustrating a method for reducing the transmission speed of audio data transmitted to one of multiple external devices by an electronic device, according to an embodiment of the present disclosure;
FIG. 13 is a flowchart illustrating a method for increasing the transmission speed of audio data transmitted to multiple external devices by an electronic device, according to an embodiment of the present disclosure;
FIG. 14 is a flowchart illustrating a method for increasing the transmission speed of audio data transmitted to one of multiple external devices by an electronic device, according to an embodiment of the present disclosure;
FIG. 15 is a flowchart illustrating a method for establishing a wireless channel with an external device by an electronic device, according to an embodiment of the present disclosure; and
FIG. 16 is a flowchart illustrating a method for transmitting audio data to multiple external devices by an electronic device, according to an embodiment of the present disclosure.

### DETAILED DESCRIPTION

Embodiments of the present disclosure are described in detail with reference to the accompanying drawings. Similar components are designated by similar reference numerals although they are illustrated in different drawings. Detailed descriptions of constructions or processes known in the art may be omitted to avoid obscuring the subject matter of the present disclosure.

The present disclosure is not limited to the embodiments and the terminology used herein, and all changes and/or equivalents or replacements thereto also belong to the scope of the present disclosure. It is to be understood that the singular forms "a," "an," and "the" include plural references unless the context clearly dictates otherwise. As used herein, the terms "A or B" and "at least one of A and/or B" may include all possible combinations of A and B. As used herein, the terms "first" and "second" may modify various components regardless of importance and/or order and are used to distinguish a component from another without limiting the components. When an element (e.g., a first element) is referred to as being (operatively or communicatively) "coupled with/to" or "connected with/to" another element (e.g., a second element), it can be coupled or connected with/to the other element directly or via a third element.

As used herein, the terms "configured to (or designated)" may be interchangeably used with other terms, such as "suitable for", "capable of", "modified to", "made to", "adapted to", "able to", or "designed to" in hardware or software in the context. Rather, the term "configured to" may mean that a device can perform an operation together with another device or part. For example, the term "processor configured (or designated) to perform A, B, and C" may mean a generic-purpose processor (e.g., a central processing unit (CPU) or application processor (AP)) that may perform the operations by executing one or more software programs stored in a memory device or a dedicated processor (e.g., an embedded processor) for performing the operations.

Examples of the electronic device, according to embodiments of the present disclosure, may include at least one of a smartphone, a tablet personal computer (PC), a mobile phone, a video phone, an e-book reader, a desktop PC, a laptop computer, a netbook computer, a workstation, a server, a personal digital assistant (PDA), a portable multimedia player (PMP), a MP3 player, a medical device, a camera, or a wearable device. The wearable device may include at least one of an accessory-type device (e.g., a watch, a ring, a bracelet, an anklet, a necklace, glasses, contact lenses, or a head-mounted device (HMD)), a fabric- or clothes-integrated device (e.g., electronic clothes), a body attaching-type device (e.g., a skin pad or tattoo), or a body implantable device. In some embodiments, examples of the smart home appliance may include at least one of a television, a digital video disk (DVD) player, an audio player, a refrigerator, an air conditioner, a cleaner, an oven, a microwave oven, a washer, a drier, an air cleaner, a set-top box, a home automation control panel, a security control panel, a TV box, a gaming console, an electronic dictionary, an electronic key, a camcorder, or an electronic picture frame.

According to an embodiment of the present disclosure, the electronic device may include at least one of various medical devices (e.g., diverse portable medical measuring devices (a blood sugar measuring device, a heartbeat measuring device, or a body temperature measuring device), a magnetic resource angiography (MRA) device, a magnetic resource imaging (MRI) device, a computed tomography (CT) device, an imaging device, or an ultrasonic device), a navigation device, a global navigation satellite system (GNSS) receiver, an event data recorder (EDR), a flight data recorder (FDR), an automotive infotainment device, an sailing electronic device (e.g., a sailing navigation device or a gyro compass), avionics, security devices, vehicular head units, industrial or home robots, drones, automatic teller machines (ATMs), point of sales (POS) devices, or Internet of things (IoT) devices (e.g., a light bulb, various sensors, a sprinkler, a fire alarm, a thermostat, a street light, a toaster, fitness equipment, a hot water tank, a heater, or a boiler).

According to various embodiments of the disclosure, examples of the electronic device may at least one of part of a piece of furniture, building/structure or vehicle, an electronic board, an electronic signature receiving device, a projector, or various measurement devices (e.g., devices for measuring water, electricity, gas, or electromagnetic waves). The electronic device may be flexible or may be a combination of the above-enumerated electronic devices. The electronic device is not limited to the above-listed embodiments. As used herein, the term "user" may denote a human or another device (e.g., an artificial intelligence electronic device) using the electronic device.

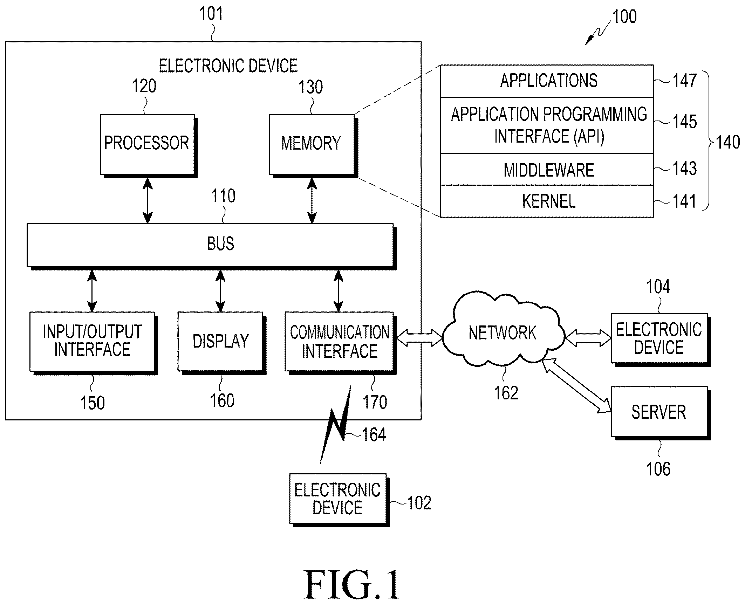

Referring to FIG. 1, according to an embodiment of the present disclosure, an electronic device 101 is included in a network environment 100. The electronic device 101 includes a bus 110, a processor 120, a memory 130, an input/output interface 150, a display 160, and a communication interface 170. In some embodiments, the electronic device 101 may exclude at least one of the components or may add one or more other components. The bus 110 may include a circuit for connecting the components 110 to 170 with one another and transferring communications (e.g., control messages or data) between the components. The processor 120 may include one or more of a CPU, an AP, or a communication processor (CP). The processor 120 may control at least one of the other components of the electronic device 101, and/or perform an operation or data processing relating to communication.

The memory 130 may include a volatile and/or non-volatile memory. For example, the memory 130 may store instructions or data related to at least one other component of the electronic device 101. According to an embodiment of the present disclosure, the memory 130 may store software and/or a program 140. The program 140 includes a kernel 141, middleware 143, an application programming interface (API) 145, and/or an application program (or application) 147. At least a portion of the kernel 141, middleware 143, or API 145 may be denoted an operating system (OS). For example, the kernel 141 may control or manage system resources (e.g., the bus 110, the processor 120, or the memory 130) used to perform operations or functions implemented in other programs (e.g., the middleware 143, the API 145, or the application 147). The kernel 141 may provide an interface that allows the middleware 143, the API 145, or the application 147 to access the individual components of the electronic device 101 to control or manage the system resources.

The middleware 143 may function as a relay to allow the API 145 or the application 147 to communicate data with the kernel 141, for example. Further, the middleware 143 may process one or more task requests received from the application 147 in order of priority. For example, the middleware 143 may assign a priority of using system resources (e.g., the bus 110, the processor 120, or the memory 130) of the electronic device 101 to at least one of the applications 147 and process one or more task requests. The API 145 is an interface allowing the application 147 to control functions provided from the kernel 141 or the middleware 143. For example, the API 145 may include at least one interface or function (e.g., a command) for filing control, window control, image processing or text control. For example, the input/output interface 150 may transfer instructions or data input from the user or other external device to other component(s) of the electronic device 101 or may output instructions or data received from other component(s) of the electronic device 101 to the user or other external devices.

The display 160 may include, for example, a liquid crystal display (LCD), a light emitting diode (LED) display, an organic light emitting diode (OLED) display, a microelectromechanical systems (MEMS) display, or an electronic paper display. The display 160 may display, for example, various contents (e.g., text, images, videos, icons, or symbols) to the user. The display 160 may include a touchscreen and may receive, for example, a touch, gesture, proximity or hovering input using an electronic pen or a body portion of the user. For example, the communication interface 170 may set up communication between the electronic device 101 and an external device (e.g., a first external device 102, a second external device 104, or a server 106). For example, the communication interface 170 may be connected with the network 162 through wireless or wired communication to communicate with the external device (e.g., the second external device 104 or the server 106).

The wireless communication may include cellular communication, which uses at least one of, for example, long term evolution (LTE), long term evolution- advanced (LTE-A), code division multiple access (CDMA), wideband code division multiple access (WCDMA), universal mobile telecommunication system (UMTS), wireless broadband (WiBro), and global system for mobile communication (GSM). According to an embodiment of the present disclosure, the wireless communication may include at least one of, for example, wireless-fidelity (Wi-Fi), light-fidelity (Li-Fi), bluetooth, bluetooth low power (BLE), zigbee, near-field communication (NFC), magnetic secure transmission (MST), radio frequency (RF), and body area network (BAN), as denoted by reference numeral 164 of FIG. 1. According to an embodiment of the present disclosure, the wireless communication may include global navigation satellite system (GNSS). The GNSS may be, for example, global positioning system (GPS), global navigation satellite system (Glonass), Beidou navigation satellite system (Beidou) or Galileo, or the European global satellite-based navigation system. Hereinafter, the terms "GPS" and "GNSS" may be interchangeably used. The wired connection may include at least one of, for example, universal serial bus (USB), high definition multimedia interface (HDMI), recommended standard (RS)-232, power line communication (PLC), and plain old telephone service (POTS). The network 162 may include at least one of telecommunication networks, for example, a computer network (e.g., local area network (LAN) or wide area network (WAN)), Internet, or a telephone network.

The first and second external devices 102 and 104 each may be a device of the same or a different type as/from the electronic device 101. According to an embodiment of the present disclosure, all or some of operations executed on the electronic device 101 may be executed on another or multiple other electronic devices 102 and 104, and/or the server 106. According to an embodiment of the present disclosure, when the electronic device 101 should perform some function or service automatically or at a request, the electronic device 101, instead of executing the function or service on its own, may request another device to perform at least some functions associated therewith. The other electronic device may execute the requested functions or additional functions and transfer a result of the execution to the electronic device 101. The electronic device 101 may provide a requested function or service by processing the received result as it is or additionally. To that end, a cloud computing, distributed computing, or client-server computing technique may be used, for example.

According to an embodiment of the present disclosure, the components (e.g., the bus 110, the processor 120, the memory 130, the input/output interface 150, and/or the communication interface 170) of the electronic device 101 may be placed in the housing of the electronic device 101, and at least some components (e.g., the display 160) may be provided on the housing. The components of the electronic device 101 may electrically be connected together.

According to an embodiment of the present disclosure, the memory 130 may store a plurality of codecs for processing audio data. The plurality of codecs may be used to process the audio data to stream the audio data to other electronic devices connected via bluetooth communication using the advanced audio distribution profile (A2DP). For example, the plurality of codecs may include a low complexity subband coding (SBC) codec, an MPEC-1 audio layer-3 (MP3) codec, an advanced audio coding (AAC) codec, an adaptive transform acoustic coding (ATRAC) codec, an aptX codec, or a scalable codec.

According to an embodiment of the present disclosure, the memory 130 may include instructions enabling the processor 120 to operate. For example, the memory 130 may include instructions enabling the processor 120 to control other components of the electronic device 101 and to interwork with other external devices 102 and 104 or the server 106. The processor 120 may control other components of the electronic device 101 and interwork with the other external devices 102 and 104 or the server 106 based on the instructions stored in the memory 130. Hereinafter, operations of the electronic device 101 are described based on each component of the electronic device 101. The instructions enabling the components to operate may be stored in the memory 130.

According to an embodiment of the present disclosure, the processor 120 may establish a first wireless channel and a second wireless channel with the first external device 102 and the second external device 104 using the communication interface 170. For example, the first and second external devices 102 and 104 may be electronic devices supporting Bluetooth, for example, a headset and a speaker which are capable of playing audio. For example, the processor 120 may establish bluetooth connections with the first and second external devices 102 and 104 and establish the first and second wireless channels for transmitting audio data.

According to an embodiment of the present disclosure, the processor 120 may select one codec supported by the first and second external devices 102 and 104 from among the plurality of codecs stored in the memory 130. The processor 120 may select one codec supported by the first and second external devices 102 and 104 while maintaining connections with the first and second external devices 102 and 104. For example, the processor 120 may select one codec that both the first and second external devices 102 and 104 support among the plurality of codecs (e.g., an SBC codec, an MP3 codec, an AAC codec, an ATRAC codec, an aptX codec, or a scalable codec).

For example, in the operation of establishing the first and second wireless channels, the processor 120 may receive information about at least one codec that is supported by each of the first and second external devices 102 and 104 from the first and second external devices 102 and 104. The processor 120 may identify at least one codec that both the first and second external devices 102 and 104 support of the plurality of codecs based on the received information.

For example, where only one of the plurality of codecs is supported by the first and second external devices 102 and 104, the processor 120 may use the codec in processing (e.g., encoding) audio data for transmission to the first and second external devices 102 and 104.

As another example, where multiple codecs of the plurality of codecs are supported by the first and second external devices 102 and 104, the processor 120 may select one of the plurality of codecs that the first and second external devices 102 and 104 support based on the priorities of the plurality of codecs stored in the memory 130. The processor 120 may use the selected codec in processing (e.g., encoding) audio data for transmission to the first and second external devices 102 and 104.

For example, the priorities of the plurality of codecs may be designated based on at least one of the compression rate, degree of loss in sound quality due to compression, whether it is possible to vary the bit rate for transmitting audio data by controlling the compression rate, or perceptual evaluation audio quality (PEAQ).

According to an embodiment of the present disclosure, the processor 120 may process (e.g., encode) audio data using the selected one of the plurality of codecs. For example, the processor 120 may encode the audio data using the selected codec.

According to an embodiment of the present disclosure, the processor 120 may transmit the processed audio data through the first and second wireless channels to the first and second external devices 102 and 104 using the communication interface 170. The first and second external devices 102 and 104 may receive the processed audio data, process (e.g., decode), and play the processed audio data with the same codec as the selected one.

As another example, one of the first and second external devices 102 and 104 may control functions related to the playback of audio data of the electronic device 101. For example, the first and second external devices 102 and 104 may control the audio data playback-related functions of the electronic device 101, such as, for example, starting or pausing the playback of audio data.

According to an embodiment of the present disclosure, the processor 120 may monitor the environment of the wireless channel. For example, the processor 120 may monitor the environment of the wireless channel with the data retransmission rate through the wireless channel. The following description focuses primarily on monitoring wireless channel environments with the data retransmission rate through the wireless channel. However, embodiments of the present disclosure are not limited thereto. Other methods are also available to monitor wireless channel environments. For example, the processor 120 may monitor the wireless channel environment through, for example, the presence or absence of data in the buffer for storing data to be transmitted through the wireless channel or flow control information received through the wireless channel.

According to an embodiment of the present disclosure, the processor 120 may control at least one of a first bit rate for transmitting the processed audio data through the first wireless channel or a second bit rate for transmitting the processed audio data through the second wireless channel based on the results of the monitoring. For example, the processor 120 may control the first bit rate based on at least one of a bit rate range designated for the selected codec or the second bit rate. The processor 120 may control the second bit rate based on at least one of a bit rate range designated for the selected codec or the first bit rate.

For example, the processor 120 may control at least one of the first bit rate or the second bit rate, controlling at least one of the transmission speed of the processed audio data through the first wireless channel or the transmission speed of the processed audio data through the second wireless channel.

For example, the processor 120 may compare a designated threshold with a first retransmission rate of the processed audio data through the first wireless channel or a second retransmission rate of the processed audio data through the second wireless channel. When the first retransmission rate or the second retransmission rate is not less than the designated threshold, the processor 120 may determine that the first or second wireless channel is in a poor condition, reducing the first bit rate and the second bit rate. The processor 120 may reduce both the first bit rate and the second bit rate, not only when the first retransmission rate and the second retransmission rate are not less than the designated threshold, but also when the first retransmission rate or the second retransmission rate is not less than the designated threshold

As another example, the processor 120 may reduce the first bit rate when the first retransmission rate is not less than the designated threshold. The processor 120 may reduce the first bit rate based on a designated bit rate range in the selected codec. The processor 120 may reduce the first bit rate within the designated bit rate range. The processor 120 may consider the second bit rate to determine the degree of reduction in the first bit rate.

As another example, the processor 120 may reduce the second bit rate when the second retransmission rate is not less than the designated threshold. The processor 120 may reduce the second bit rate based on a designated bit rate range in the selected codec. The processor 120 may reduce the second bit rate within the designated bit rate range. The processor 120 may consider the first bit rate to determine the degree of reduction in the second bit rate.

According to an embodiment of the present disclosure, the processor 120 may activate an operation mode for transmitting audio data to the first and second external devices 102 and 104 according to an input from a user. When the operation mode is activated, the processor 120 may display, through the display 160, a graphical object to represent the activation of the operation mode. The processor 120 may display the graphical object in various forms depending on screens displayed through the display 160.

For example, upon receipt of a user input to activate the operation mode, the processor 120 may select one codec, which the first and second external devices 102 and 104 support, from among the plurality of codecs. Before the operation mode is activated, the processor 120 may transmit audio data to only one of the first and second external devices 102 and 104 although it is connected with the first and second external devices 102 and 104.

As another example, the processor 120 is connected with only the first external device 102, and as it is connected to the second external device 104 in the activated state of the operation mode, the processor 120 may select one codec that the first and second external devices support 102 and 104.

According to an embodiment of the present disclosure, the processor 120 may deactivate the operation mode, which is active according to a user input. When the operation mode is deactivated, the processor 120 may perform control so that the graphical object is not displayed through the display 160.

For example, when the operation mode is deactivated, the processor 120 may transmit audio data to only one of the first and second external devices 102 and 104. The processor 120 may select one to which to transmit audio data between the first and second external devices 102 and 104. The processor 120 may select the device to which to transmit audio data according to a user input or order of connection to the first and second external devices 102 and 104. For example, the external device selected by the user, the external device connected before the operation mode is activated, or the external device after the operation mode is activated, may be selected.

For example, the processor 120 may process (e.g., encode) audio data using a codec supported by the selected external device among the plurality of codecs. The codec supported by the selected external device may be a codec that has been used to transmit audio data to the selected external device before the operation mode is activated or a codec with a higher priority among the codecs supported by the selected external device. The codec supported by the selected external device may be the same or different from the codec that has been used to transmit audio data while the operation mode is active.

For example, the processor 120 may transmit the processed audio data to the selected electronic device. The processor 120 may restrict transmission of the processed audio data to the external device not selected among the first and second external devices 102 and 104.

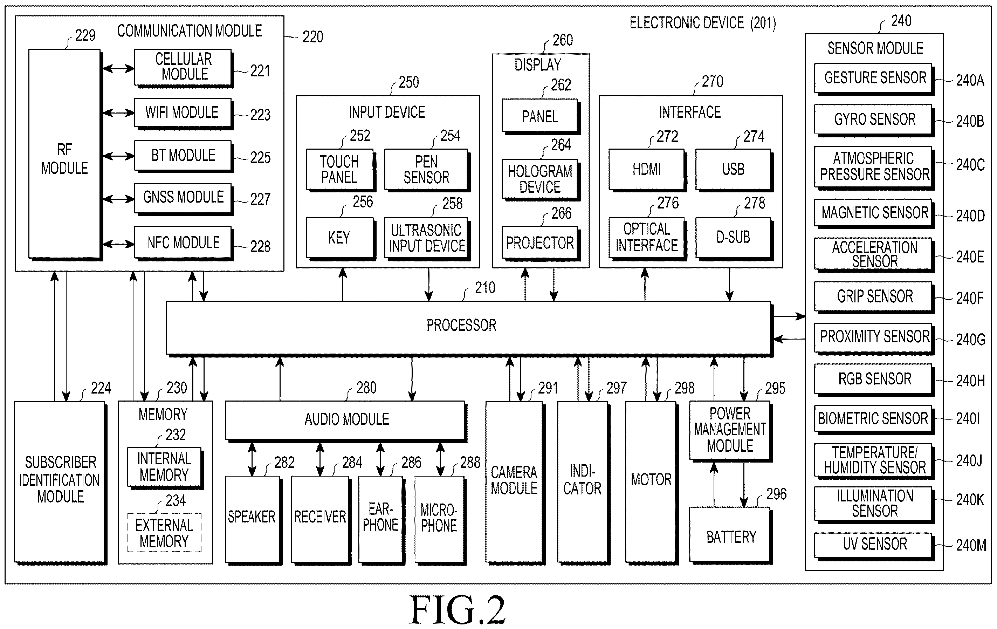

FIG. 2 is a block diagram illustrating an electronic device 201 according to an embodiment of the present disclosure. The electronic device 201 includes one or more processors (e.g., APs) 210, a communication module 220, a subscriber identification module (SIM) 224, a memory 230, a sensor module 240, an input device 250, a display 260, an interface 270, an audio module 280, a camera module 291, a power management module 295, a battery 296, an indicator 297, and a motor 298. The processor 210 may control multiple hardware and software components connected to the processor 210 by running, for example, an OS or APs, and the processor 210 may process and compute various data. The processor 210 may be implemented in, for example, a system on chip (SoC). The processor 210 may further include a graphic processing unit (GPU) and/or an image signal processor. The processor 210 may include at least some of the components shown in FIG. 2 (e.g., a cellular module 221). The processor 210 may load a command or data received from at least one of other components (e.g., a non-volatile memory) on a volatile memory, process the command or data, and store resultant data in the non-volatile memory.

The communication module 220 may have the same or a similar configuration as the communication interface 170. The communication module 220 includes the cellular module 221, a wireless fidelity (Wi-Fi) module 223, a bluetooth (BT) module 225, a GNSS module 227, a NFC module 228, and a RF module 229. The cellular module 221 may provide voice call, video call, text, or Internet services through a communication network. According to an embodiment of the present disclosure, the cellular module 221 may perform identification or authentication on the electronic device 201 in the communication network using a SIM 224 (e.g., a SIM card). The cellular module 221 may perform at least some of the functions provided by the processor 210.. The cellular module 221 may include a CP. At least some (e.g., two or more) of the cellular module 221, the Wi-Fi module 223, the Bluetooth module 225, the GNSS module 227, or the NFC module 228 may be included in a single integrated circuit (IC) or an IC package. The RF module 229 may communicate data, such as, for example, communication signals (e.g., RF signals). The RF module 229 may include, for example, a transceiver, a power amp module (PAM), a frequency filter, a low noise amplifier (LNA), or an antenna. At least one of the cellular module 221, the Wi-Fi module 223, the bluetooth module 225, the GNSS module 227, or the NFC module 228 may communicate RF signals through a separate RF module. The SIM 224 may include, for example, a card including a SIM, or an embedded SIM, and may contain unique identification information (e.g., an integrated circuit card identifier (ICCID)) or subscriber information (e.g., an international mobile subscriber identity (IMSI)).

The memory 230 includes an internal memory 232 and/or an external memory 234. The internal memory 232 may include at least one of, for example, a volatile memory (e.g., a dynamic RAM (DRAM), a static RAM (SRAM), a synchronous dynamic RAM (SDRAM), etc.) or a non-volatile memory (e.g., a one-time programmable ROM (OTPROM), a programmable ROM (PROM), an erasable and programmable ROM (EPROM), an electrically erasable and programmable ROM (EEPROM), a mask ROM, a flash ROM, a flash memory (e.g., a NAND flash, or a NOR flash), a hard drive, or solid-state drive (SSD)). The external memory 234 may include a flash drive, such as, for example, a compact flash (CF) memory, a secure digital (SD) memory, a micro-SD memory, a min-SD memory, an extreme digital (xD) memory, a multi-media card (MMC), or a memory stick. The external memory 234 may be functionally or physically connected with the electronic device 201 via various interfaces.

The sensor module 240 may measure a physical quantity or detect a motion state of the electronic device 201, and the sensor module 240 may convert the measured or detected information into an electrical signal. The sensor module 240 includes at least one of a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (e.g., a red-green-blue (RGB) sensor), a bio sensor 240I, a temperature/humidity sensor 240J, an illumination sensor 240K, and an ultra violet (UV) sensor 240M. Additionally or alternatively, the sensing module 240 may include an e-nose sensor, an electromyography (EMG) sensor, an electroencephalogram (EEG) sensor, an electrocardiogram (ECG) sensor, an infrared (IR) sensor, an iris sensor, or a finger print sensor. The sensor module 240 may further include a control circuit for controlling one or more of the sensors included in the sensing module. According to an embodiment of the present disclosure, the electronic device 201 may further include a processor configured to control the sensor module 240 as part of the processor 210 or separately from the processor 210, and the electronic device 201 may control the sensor module 240 while the processor 210 is in a sleep mode.

The input unit 250 includes at least one of a touch panel 252, a (digital) pen sensor 254, a key 256, and an ultrasonic input device 258. The touch panel 252 may use at least one of capacitive, resistive, infrared, or ultrasonic methods. The touch panel 252 may further include a control circuit. The touch panel 252 may further include a tactile layer and may provide a user with a tactile reaction. The (digital) pen sensor 254 may include, e.g., a part of a touch panel or a separate sheet for recognition. The key 256 may include e.g., a physical button, an optical key, or a key pad. The ultrasonic input device 258 may sense an ultrasonic wave generated from an input tool through a microphone 288 to identify data corresponding to the sensed ultrasonic wave.

The display 260 includes at least one of a panel 262, a hologram device 264, a projector 266, and a control circuit for controlling the same. The panel 262 may be implemented to be flexible, transparent, or wearable. The panel 262, together with the touch panel 252, may be configured in one or more modules. According to an embodiment of the present disclosure, the panel 262 may include a pressure sensor (or force sensor) that may measure the strength of a pressure by the user's touch. The pressure sensor may be implemented in a single body with the touch panel 252 or may be implemented in one or more sensors separate from the touch panel 252. The hologram device 264 may make three dimensional (3D) images (holograms) in the air by using light interference. The projector 266 may display an image by projecting light onto a screen. The screen may be, for example, located inside or outside of the electronic device 201.

The interface 270 includes at least one of a high definition multimedia interface (HDMI) 272, a USB 274, an optical interface 276, or a D-subminiature (D-sub) 278. The interface 270 may be included in the communication interface 170 shown in FIG. 1. Additionally or alternatively, the interface 270 may include a mobile high-definition link (MHL) interface, a secure digital (SD) card/ multimedia card (MMC) interface, or Infrared Data Association (IrDA) standard interface.

The audio module 280 may convert a sound signal into an electrical signal and vice versa. At least a part of the audio module 280 may be included in the input/output interface 145 of FIG. 1. The audio module 280 may process sound information input or output through a speaker 282, a receiver 284, an earphone 286, or the microphone 288.

The camera module 291 is a device for capturing still images and videos, and may include, according to an embodiment of the present disclosure, one or more image sensors (e.g., front and back sensors), a lens, an image signal processor (ISP), or a flash, such as an LED or xenon lamp.

The power manager module 295 may manage power of the electronic device 201, for example. According to an embodiment of the present disclosure, the power manager module 295 may include a power management Integrated circuit (PMIC), a charger IC, or a battery gauge. The PMIC may have a wired and/or wireless recharging scheme. The wireless charging scheme may include e.g., a magnetic resonance scheme, a magnetic induction scheme, or an electromagnetic wave based scheme, and an additional circuit, such as a coil loop, a resonance circuit, a rectifier, or the like may be added for wireless charging.

The battery gauge may measure an amount of remaining power of the battery 296, a voltage, a current, or a temperature while the battery 296 is being charged. The battery 296 may include, e.g., a rechargeable battery or a solar battery.

The indicator 297 may indicate a particular state of the electronic device 201 or a part (e.g., the processor 210) of the electronic device, including, for example, a booting state, a message state, or recharging state.

The motor 298 may convert an electric signal to a mechanical vibration and may generate a vibrational or haptic effect.

The electronic device 201 may include a mobile TV supporting device (e.g., a GPU) that may process media data as per, e.g., digital multimedia broadcasting (DMB), digital video broadcasting (DVB), or mediaFlo^{™} standards.

Each of the aforementioned components of the electronic device may include one or more parts, and a name of the part may vary with a type of the electronic device. According to various embodiments, the electronic device 201 may exclude some noted elements or include additional elements, or some of the elements may be combined into a single entity that may perform the same function as by the elements before combined.

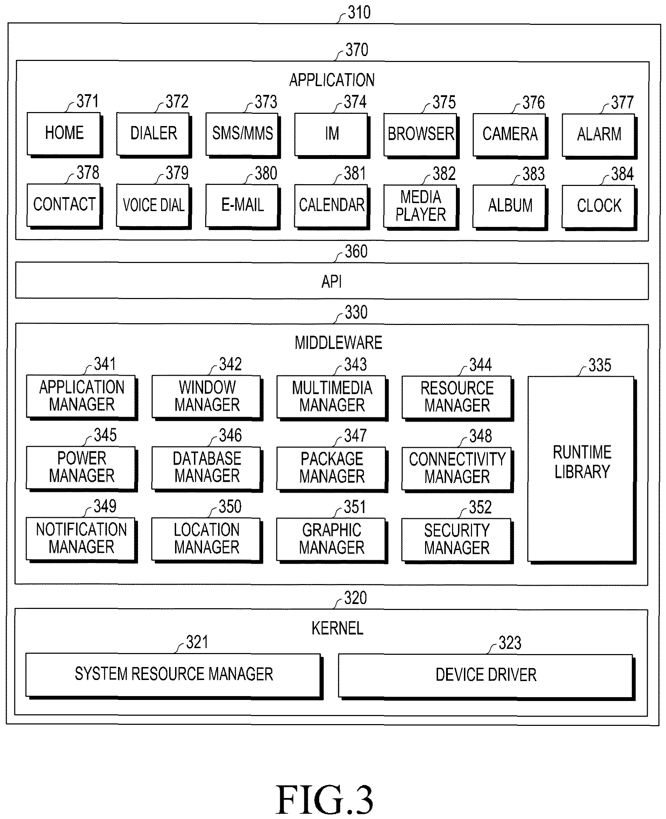

FIG. 3 is a block diagram illustrating a program module, according to an embodiment of the present disclosure. According to an embodiment of the present disclosure, a program module 310 may include an OS) controlling resources related to the electronic device 101 and/or various applications 147 driven on the operating system. Referring to Fig. 3, the program module 310 includes a kernel 320, middleware 330, an API 360, and/or an application 370. At least a part of the program module 310 may be preloaded on the electronic device or may be downloaded from an external device.

The kernel 320 may include, for example, a system resource manager 321 and/or a device driver 323. The system resource manager 321 may perform control, allocation, or recovery of system resources. According to an embodiment of the present disclosure, the system resource manager 321 may include a process managing unit, a memory managing unit, or a file system managing unit. The device driver 323 may include, for example, a display driver, a camera driver, a bluetooth driver, a shared memory driver, a USB driver, a keypad driver, a Wi-Fi driver, an audio driver, or an inter-process communication (IPC) driver. The middleware 330 may provide various functions to the application 370 through the API 360 so that the application 370 may use limited system resources in the electronic device or provide functions jointly required by applications 370. The middleware 330 includes at least one of a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, or a security manager 352.

The runtime library 335 may include a library module used by a compiler in order to add a new function through a programming language while the application 370 is being executed. The runtime library 335 may perform input/output management, memory management, or arithmetic function processing. The application manager 341 may manage the life cycle of the applications 370. The window manager 342 may manage GUI resources used on the screen. The multimedia manager 343 may grasp formats necessary to play media files and use a codec appropriate for a format to perform encoding or decoding on media files. The resource manager 344 may manage the source code or memory space of the application 370. The power manager 345 may manage the capacity, temperature, or power of the battery, and determine and provide power information necessary for the operation of the electronic device using a corresponding piece of information of such. According to an embodiment of the present disclosure, the power manager 345 may interwork with a basic input/output system (BIOS). The database manager 346 may generate, search, or vary a database to be used in the applications 370. The package manager 347 may manage installation or update of an application that is distributed in the form of a package file.

The connectivity manager 348 may manage wireless connectivity. The notification manager 349 may provide an event, such as, for example, an arrival message, an appointment, or a proximity alert, to the user. The location manager 350 may manage locational information on the electronic device. The graphic manager 351 may manage graphic effects to be offered to the user and their related user interface. The security manager 352 may provide system security or user authentication, for example. According to an embodiment of the present disclosure, the middleware 330 may include a telephony manager for managing the voice or video call function of the electronic device or a middleware module able to form a combination of the functions of the above-described elements. The middleware 330 may provide a module specified according to the type of the operating system. The middleware 330 may dynamically omit some existing components or add new components.

The API 360 may be a set of API programming functions and may have different configurations depending on operating systems. For example, in the case of Android or iOS, one API set may be provided per platform, and in the case of Tizen, two or more API sets may be offered per platform.

The application 370 provides, for example, a home 371, a dialer 372, an SMS/MMS 373, an instant message (IM) 374, a browser 375, a camera 376, an alarm 377, a contact 378, a voice dial 379, an email 380, a calendar 381, a media player 382, an album 383, or a clock 384, a heath-care (e.g., measuring the degree of workout or blood sugar), or provision of environmental information (e.g., provision of air pressure, moisture, or temperature information). According to an embodiment of the present disclosure, the application 370 may include an information exchanging application supporting information exchange between the electronic device and an external device. Examples of the information exchange application may include, but is not limited to, a notification relay application for transferring specific information to the external device, or a device management application for managing the external device. For example, the notification relay application may transfer notification information generated by another application of the electronic device to the external device, or receive notification information from the external device and provide the received notification information to the user. For example, the device management application may install, delete, or update a function (e.g., turn-on/turn-off the external device (or some elements) or adjusting the brightness (or resolution) of the display) of the external device communicating with the electronic device or an application operating on the external device. The application 370 may include an application (e.g., a health-care application of a mobile medical device) designated according to an attribute of the external device. The application 370 may include an application received from the external device. At least a portion of the program module 310 may be implemented (e.g., executed) in software, firmware, hardware (e.g., the processor 210), or a combination of at least two or more thereof and may include a module, program, routine, command set, or process for performing one or more functions.

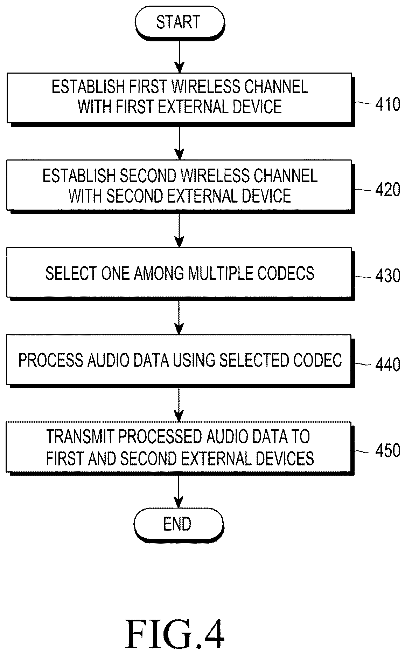

FIG. 4 is a flowchart illustrating a method for transmitting audio data by an electronic device, according to an embodiment of the present disclosure.

In operation 410, a processor 120 of the electronic device 101 establishes a first wireless channel with a first external device using a wireless communication circuit (e.g., the communication interface 170). For example, in the operation of establishing the first wireless channel with the first external device, the processor may receive information about a codec (e.g., an aptX codec or SBC codec) supported by the first external device using the wireless communication circuit.

In operation 420, the processor establishes a second wireless channel with a second external device using the wireless communication circuit. For example, in the operation of establishing the second wireless channel with the second external device, the processor may receive information about a codec (e.g., a scalable codec or SBC codec) supported by the second external device using the wireless communication circuit.

In operation 430, the processor selects one codec supported by the first and second external devices from among a plurality of codecs stored in a memory 130 of the electronic device 101. For example, the processor may display, on a display 160, a screen for activating an operation mode (e.g., a dual audio mode) to transmit audio data to the first and second external devices. The screen may be displayed according to a user input or as the second wireless channel with the second external device is established. According to the receipt of an input to activate the operation mode while the screen is displayed, the processor may activate the operation mode and select one codec that the first and second external devices support.

As another example, the processor is connected with only the first external device, and as it is connected to the second external device in the activated state of the operation mode, the processor may select one codec that the first and second external devices support.

For example, the processor may identify at least one codec supported by the first and second external devices among the plurality of codecs based on the information about the codec supported by the first and second external devices, which is received from the first and second external devices, and the processor may select a codec for processing (e.g., encoding) audio data. For example, the processor may select the SBC codec supported by the first and second external devices as a codec for processing audio data in the operation mode based on the received information.

In operation 440, the processor processes (e.g., encodes) audio data using the selected codec. For example, the processor may process the audio data using the selected SBC codec.

In operation 450, the processor transmits the processed audio data to the first and second external devices through the first and second wireless channels using the wireless communication circuit. For example, the first and second external devices may receive the processed audio data, process (e.g., decode), and play the processed audio data with the same codec (e.g., an SBC codec).

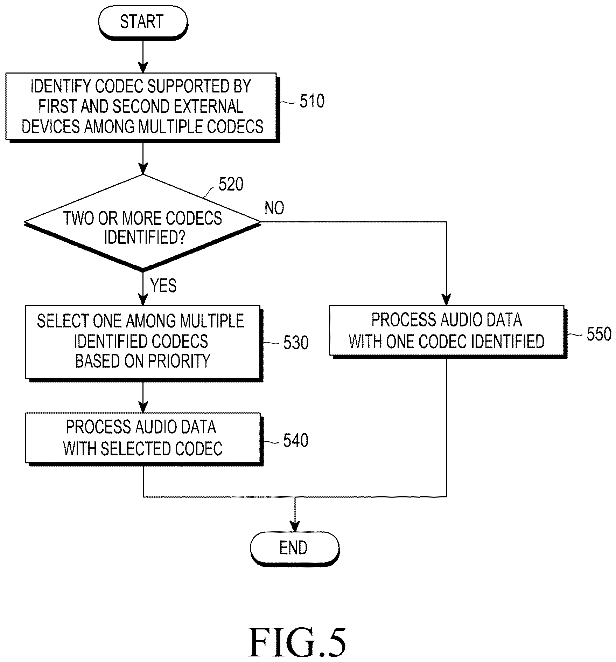

FIG. 5 is a flowchart illustrating a method for selecting a codec to process (e.g., encode) audio data by an electronic device, according to an embodiment of the present disclosure.

In operation 510, a processor 120 of the electronic device 101 may identify at least one codec commonly supported by a first external device and a second external device among at least one codec that each of the first and second external devices supports based on information about the at least one codec that is received from the first and second external devices.

In operation 520, the processor determines whether a plurality of codecs are commonly supported by the first and second external devices. When a plurality of codecs are supported, the processor needs to select one for processing audio data among the plurality of codecs that the first and second external devices support. Thus, the processor needs to determine whether a plurality of codecs are commonly supported by the first and second external devices.

When a plurality of codecs are commonly supported by the first and second external devices, in operation 530, the processor selects one of the plurality of codecs commonly supported by the first and second external devices based on the priorities of the plurality of codecs stored in a memory 130 of the electronic device 101.

For example, the priorities of the plurality of codecs may be designated based on at least one of the compression rate, degree of loss in sound quality due to compression, whether it is possible to vary the bit rate for transmitting audio data by controlling the compression rate, or PEAQ.

For example, when the memory stores a scalable codec, an AAC codec, and an SBC codec, the respective priorities of the scalable codec, AAC codec, and SBC codec may be designated as shown in Table 1 below.

**Table 1**

| priority | |
|---|---|
| 1 | Scalable codec |
| 2 | AAC codec |
| 3 | SBC codec |

However, this is merely for description purposes, and embodiments of the present disclosure are not limited thereto. For example, the priorities of the plurality of codecs may differ from those shown in Table 1 depending on criteria for designating priority.

For example, where the scalable codec and the SBC codec are identified as commonly supported by the first and second external devices, and their respective priorities are designated as shown in Table 1, the processor may select the scalable codec.

In operation 540, the processor processes (e.g., encodes) audio data using the codec selected based on priority among the plurality of codecs. For example, the processor may encode the audio data using the selected scalable codec.

When two or more codecs commonly supported by the first and second external devices are not identified in operation 520, the processor processes (e.g., encodes) audio data using the one identified codec, in operation 550. For example, when only the SBC codec is commonly supported by the first and second external devices, the processor may encode audio data using the SBC codec.

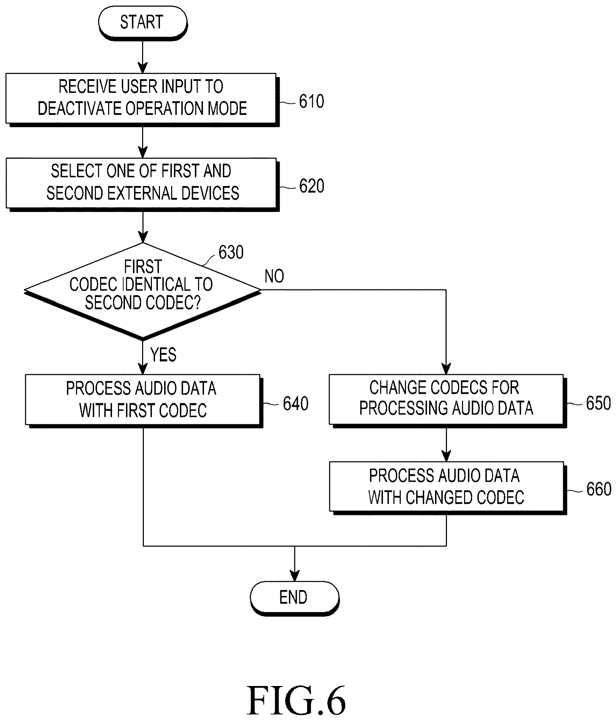

FIG. 6 is a flowchart illustrating a method for operating an electronic device after deactivating an operation mode for transmitting audio data to multiple external devices, according to an embodiment of the present disclosure.

In operation 610, a processor 120 of the electronic device 101 deactivates an operation mode (e.g., a dual audio mode) for transmission of audio data to first and second external devices according to a user input.

In operation 620, when the operation mode is deactivated, the processor selects one of the first and second external devices to which to transmit audio data. When the operation mode is deactivated, the processor may transmit audio data to only one external device. According to an embodiment of the present disclosure, the processor may select the external device to which to transmit audio data according to a user input, order of connection to the first and second external devices, or ambient environment. For example, the external device selected by the user, the external device connected before the operation mode is activated, or the external device after the operation mode is activated may be selected.

For example, when each of the first and second external devices is connected before the operation mode is activated, the processor may select the external device connected later of the first and second external devices as the external device to which to transmit audio data, according to order of connection. As another example, the processor may select the external device connected first of the first and second external devices as the external device to which to transmit audio data, according to order of connection to the first and second external devices.

For example, when the first external device is connected before the operation mode is activated, while the second external device is connected after the operation mode is activated, the processor may select the second external device connected after the operation mode is activated as the external device to which to transmit audio data, according to order of connection. As another example, the processor may select the first external device connected before the operation mode is activated as the external device to which to transmit audio data according to order of connection.

For example, when the first and second external devices are connected after the operation mode is activated, the processor may select the external device connected later of the first and second external devices as the external device to which to transmit audio data, according to order of connection. As another example, the processor may select the external device connected first of the first and second external devices as the external device to which to transmit audio data, according to order of connection.

As another example, when the operation mode is deactivated, the processor may select one of the first and second external devices to which to transmit audio data according to the ambient environment. For example, when a designated number of people or more are determined to be positioned around the electronic device 101 by at least one sensor of the sensor module 240, a camera of the camera module 291, or a microphone 288 of the electronic device 101, the processor may select an external device (e.g., a speaker) playing audio data for a number of people to listen to the audio as the external device to which to transmit audio data. As another example, when a designated number of people or more are determined to be positioned around the electronic device 101 by at least one sensor of the sensor module 240 or a communication interface 170, the processor may select an external device (e.g., a speaker) playing audio data for a number of people to listen to the audio as the external device to which to transmit audio data.

**In** operation 630, the processor determines whether a first codec used to transmit audio data while the operation mode is active is the same as a second codec to be used to transmit audio data to a selected electronic device. After an external device to which to transmit audio data is selected, the processor may select the second codec to be used to transmit audio data to the selected external device among codecs supported by the selected external device.

For example, the second codec may be selected as the codec that has been used to transmit audio data to the selected external device before the operation mode (e.g., a dual audio mode) is activated, among the codecs that the selected external device supports. For example, when the selected external device supports an AAC codec, a scalable codec, and an SBC codec, the AAC codec is used as the first codec, and the scalable codec is used before the operation mode is activated, the processor may select the scalable codec as the second codec. As another example, the processor may select, as the second codec, the other codec, i.e., the SBC codec, than the scalable codec which has been used before the operation mode is activated and the first codec among the codecs that the selected external device supports.

As another example, when the selected external device is connected after the operation mode (e.g., a dual audio mode) is activated, the second codec may be selected as one with a higher priority among the codecs that the selected external device supports. For example, when the selected external device is connected after the operation mode is activated, the processor may select the scalable codec as the second codec based on the priorities shown in Table 1.

According to an embodiment of the present disclosure, the processor may determine whether the first codec is the same as the second codec to determine whether changing codecs is needed to transmit audio data to the selected external device.

When the first codec is the same as the second codec, the processor processes (e.g., encodes) audio data with the first codec, in operation 640. For example, when the first codec is the same as the second codec, the processor may keep processing audio data with the first codec without changing codecs for processing (e.g., encoding) audio data. For example, when the first codec is the AAC codec, and the AAC codec is selected as the second codec among the codecs the selected external device supports, the processor may continue to use the AAC codec to process audio data without changing codecs for processing audio data.

When the first codec differs from the second codec, the processor changes codecs for processing (e.g., encoding) audio data, in operation 650. For example, when the first codec is different from the second codec, the processor may change the codec for processing audio data from the first codec to the second codec. For example, where the first codec is the AAC codec, and the scalable codec or SBC codec is selected as the second codec among the codecs the selected external device supports, the processor may change the codec for processing audio data from the AAC codec to the scalable codec or SBC codec.

Bluetooth communication is conducted within a limited frequency band, and is thus subject to a limitation in the amount of data transmitted. For example, the amount of data transmitted from the electronic device to only one electronic device that the electronic device connects to may be larger than the amount data transmitted from the electronic device to each of multiple external devices that the electronic device connects to. Thus, where data is transmitted to only one device, the processor may use a codec that causes less quality deterioration to present better sound quality although the data volume transmitted is increased due to the reduced compression rate.

For example, since audio data is transmitted to only one external device before the operation mode is activated, a low quality-loss codec may be used as the second codec despite an increase in the data volume transmitted due to the reduced compression rate. Since audio data is transmitted to multiple external devices while the operation mode is active, a codec that has a higher compression rate than the second codec with the result of relatively more quality loss may be used as the first codec. Thus, where the first codec is different from the second codec, the processor may change the codec for transmitting audio data from the first codec to the second codec.

For example, changing codecs for processing audio data may be done using an interval when the playback of audio data pauses to prevent sound drops. For example, the processor may perform the codec change during an interval when the playback of audio data pauses, such as, for example, when the playback of audio data pauses as a switch occurs in the audio playback list, when the playback of audio data pauses as an application (e.g., a call application, video application, or broadcast application) runs, or when the user pauses the playback of audio data.

In operation 660, the processor processes (e.g., encodes) audio data with the changed second codec. For example, where the codec for processing audio data is changed to the scalable codec, the processor may encode audio data using the scalable codec.

As another example, even when the first codec differs from the second codec, the processor may keep using the first codec to process audio data without changing codecs according to the user's choice.

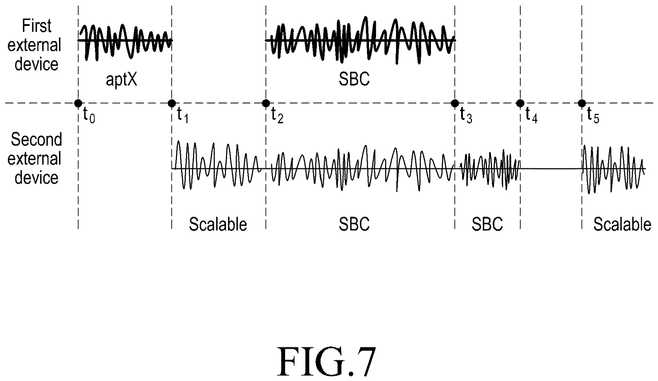

FIG. 7 is a diagram illustrating a method for transmitting audio data to multiple external devices by an electronic device, according to an embodiment of the present disclosure.

Referring to FIG. 7, for example, a first external device may support an aptX codec and an SBC codec, a second external device may support a scalable codec and the SBC codec, and the electronic device 101 may support the aptX codec, the scalable codec, and the SBC codec. For example, the respective priorities of the aptX codec, the scalable codec, and the SBC codec may be shown in Table 2 below.

**Table 2**

| priority | |
|---|---|
| 1 | Scalable codec |
| 2 | aptX codec |
| 3 | SBC codec |

However, this is merely for description purposes, and embodiments of the present disclosure are not limited thereto. For example, the priorities of the plurality of codecs may differ from those shown in Table 2 depending on criteria for designating priority.

Referring to Fig. 7, for example, the function (e.g., dual audio) of transmitting audio data to multiple external devices may be inactive during the time interval from t₀ to t₂ and after t₃, and the function of transmitting audio data to multiple external devices may be active only during the time interval from t₂ to t₃.

As another example, referring to FIG. 7, while the electronic device 101 is active during the time interval between t0 and t5, the electronic device 101 may be connected with only the first external device during the time interval between t₀ and t₁, with only the second external device during the time interval between t₁ and t₂, with both the first external device and the second external device during the time interval between t₂ and t₃. After t₃, the electronic device 101 may be disconnected from the first external device, remaining connected with only the second external device.

For example, during the time interval between t₀ and t₁, the electronic device 101 may be configured to transmit audio data to the first external device, and a processor 120 of the electronic device 101 may process (e.g., encode) audio data using the aptX codec which is selected based on the priorities between the aptX codec and the SBC codec the first external device supports, and the processor may transmit the processed audio data to the first external device using a wireless communication circuit (e.g., the communication interface 170). The first external device may process (e.g., decode) the received audio data using the selected aptX codec.

During the time interval between t₁ and t₂, the electronic device 101 may be configured to transmit audio data to the second external device, and the processor may process (e.g., encode) audio data using the scalable codec which is selected based on the priorities between the scalable codec and the SBC codec the second external device supports, and the processor may transmit the processed audio data to the second external device using the wireless communication circuit. The second external device may process (e.g., decode) the received audio data using the selected scalable codec.

As such, during the time interval between t₀ and t₂ when the electronic device is connected with only one of the first and second external devices, or when the function of transmitting audio data to the first and second external devices is inactive, the processor may transmit audio data to only one of the first and second external devices using the wireless communication circuit.

For example, where the function is activated or the electronic device is connected with both the first and second external devices in the active state of the function at t₂, the processor may select the SBC codec that is a codec commonly supported by the first and second external devices among the aptX codec, the scalable codec, and the SBC codec. During the time interval between t₂ and t₃, when the electronic device is connected with both the first and second external devices in the activated state of the function or the function is activated, the processor may process (e.g., encode) audio data using the SBC codec and transmit the processed audio data to the first and second external devices using the wireless communication circuit. The first and second external devices may process (e.g., decode) the received audio data using the selected SBC codec.

For example, when the function is deactivated at t₃, the processor may select the second external device between the first and second external devices. As the second external device is selected, the processor may restrict the transmission of the processed audio data to the first external device while transmitting audio data to only the second external device selected.

As another example, even when the function is not deactivated, the processor may transmit audio data to only the second external device when the first external device powers off, or when sensing a disconnection from the first external device.

The processor may process audio data using the SBC codec that had been used during the time interval between t₃ to t₄ and transmit the processed audio data to the second external device using the wireless communication circuit.

Since the scalable codec used during the time interval between t₁ and t₂ differs from the SBC codec used during the time interval between t₃ and t₄, the processor may change codecs for processing audio data. For example, the processor may negotiate with the second external device to change codecs. To change codecs, the processor may provide information about the changed codec to the second external device, and the second external device may accept the codec change based on the information about the changed codec.

During the time interval between t₄ and t₅, the processor may pause the transmission of audio data to change codecs for processing audio data. For example, to prevent sound drops, the processor may change the codec for processing audio data from the SBC codec to the scalable codec during the time interval between t₄ and t₅ when the playback of audio data pauses. For example, the processor may perform the codec change during an interval when the playback of audio data pauses, such as, for example, when the playback of audio data pauses as a switch occurs in the audio playback list, when the playback of audio data pauses as an application (e.g., a call application, a video application, or a broadcast application) runs, or when the user pauses the playback of audio data.

After t₅, the processor may process audio data using the scalable codec and transmit the processed audio data to the second external device using the wireless communication circuit.

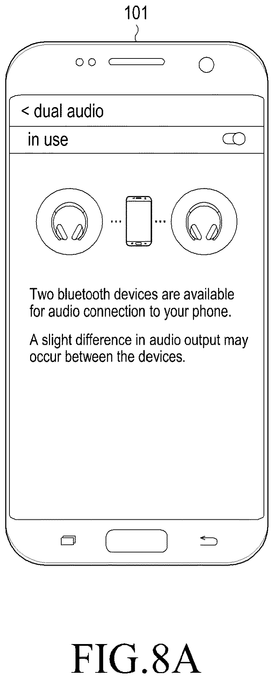

FIG. 8A is a diagram illustrating a screen for setting an operation mode to transmit audio data to multiple external devices, which is displayed on an electronic device, according to an embodiment of the present disclosure.

According to an embodiment of the present disclosure, a processor 120 of the electronic device 101 may display, through a display 160, a screen for setting an operation mode (e.g., a dual audio mode) for transmitting audio data to multiple external devices, as shown in FIG. 8A. For example, a description of the operation mode or a method for using the operation mode may be provided through the screen. For example, the processor may activate or deactivate the operation mode according to a user input that is received while the screen is displayed.

According to an embodiment of the present disclosure, the processor may activate or deactivate the operation mode according to a user input that is received even when the screen is displayed. For example, although not shown, the operation mode may be activated or deactivated based on the user's gesture or an input to an indicator (or status bar), quick panel, or icon displayed on at least part of the display.

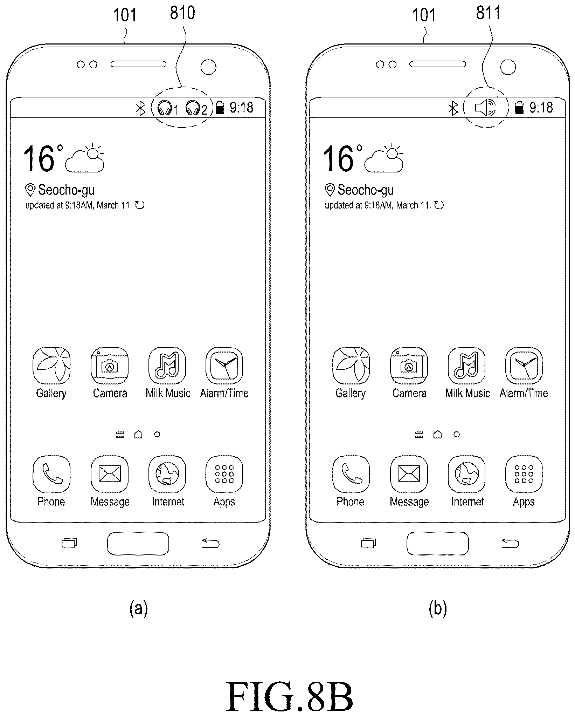

FIG. 8B is a diagram illustrating a home screen in a state where an operation mode for transmitting audio data to multiple external devices is activated, which is displayed on an electronic device, according to an embodiment of the present disclosure.

According to an embodiment of the present disclosure, a processor 120 of the electronic device 101 may display a graphical object 810 on a status bar at an upper end to represent the activated state of an operation mode (e.g., a dual audio mode) to transmit audio data to multiple external devices while a home screen is displayed as shown in (a) of FIG. 8B. The user may easily notice the activated state of the operation mode through the graphical object 810 displayed on the status bar. According to an embodiment of the present disclosure, the graphical object 810 may be displayed differently based on the type of the external device (e.g., a speaker, earphone, headset, or smartphone). According to an embodiment of the present disclosure, the processor may release the connection with one electronic device based on a user input (e.g., a touch or pressed touch) to the graphical object 810.

According to an embodiment of the present disclosure, as shown in (b) of FIG. 8B, the processor may display a graphical object 811 on the status bar at the upper end to represent that the operation mode is in the active state while the home screen is in display. The user may easily notice the activated state of the operation mode through the graphical object 811 displayed on the status bar. According to an embodiment of the present disclosure, the processor may release the connection with one electronic device based on a user input to the graphical object 811. According to an embodiment of the present disclosure, the graphical object 811 may be displayed in various forms to represent the activation of the operation mode.

According to an embodiment of the present disclosure, although not shown, where the operation mode is activated, and the electronic device is connected with the plurality of external devices, the processor may display a plurality of graphical objects on the status bar to represent that the electronic device is connected with each of the plurality of external devices via bluetooth communication.

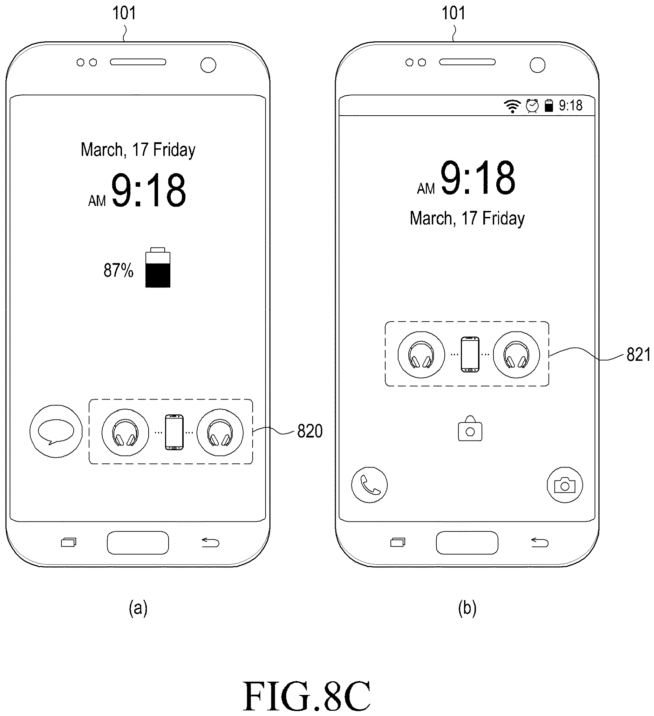

FIG. 8C is a diagram illustrating a standby screen and a lock screen in a state where an operation mode for transmitting audio data to multiple external devices is activated, which is displayed on an electronic device, according to an embodiment of the present disclosure.

According to an embodiment of the present disclosure, a processor 120 of the electronic device 101 may display a graphical object 820 to represent the activated state of an operation mode (e.g., a dual audio mode) to transmit audio data to multiple external devices while a standby screen is displayed as shown in (a) of FIG. 8C. The user may easily notice the activated state of the operation mode through the graphical object 820 displayed on the standby screen even without releasing the standby screen. As another example, the graphical object 820 may always be displayed on the standby screen as is information to display the date, time, and battery status, or a graphical object to indicate receipt of messages.

According to an embodiment of the present disclosure, the processor may release the connection with one electronic device based on a user input (e.g., a touch or pressed touch) to the graphical object 820.

According to an embodiment of the present disclosure, as shown in (b) of FIG. 8C, the processor may display a graphical object 821 to represent that the operation mode is in the active state while the lock screen is in display. The user may easily notice the activated state of the operation mode through the graphical object 821 displayed on the lock screen even without releasing the lock screen.

According to an embodiment of the present disclosure, the processor may release the connection with one electronic device based on a user input to the graphical object 821.

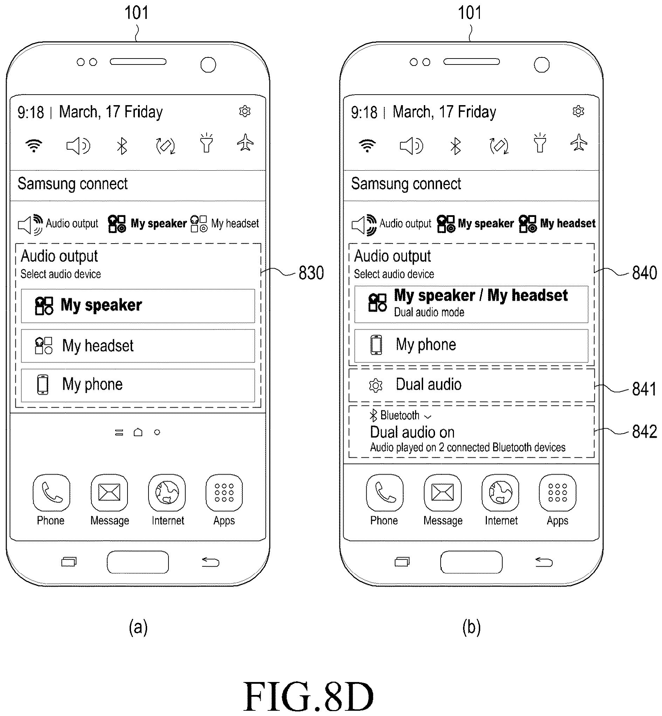

FIG. 8D is a diagram illustrating a status bar that is expanded depending on whether an operation mode for transmitting audio data to multiple external devices is activated, which is displayed on an electronic device, according to an embodiment of the present disclosure.

According to an embodiment of the present disclosure, a processor 120 may display an expanded status bar according to a user input in the state that an operation mode (e.g., a dual audio mode) for transmitting audio data to a plurality of external devices is not active, as shown in (a) of FIG. 8D. The processor may display the plurality of external devices wirelessly connected with the electronic device 101 through the status bar. The processor may display an external device (e.g., a speaker) that plays audio data among the plurality of connected external devices to come to the user's notice through the expanded status bar.

As another example, the processor may display a menu 830 for selecting a device to play audio data among the plurality of connected external devices and the electronic device 101 through the expanded status bar. The processor may change devices to play audio data according to a user input. For example, when a headset is selected as the device to play audio data according to a user input while audio data is played through a speaker wirelessly connected with the electronic device 101, the processor may transmit the audio data to the headset. As another example, when the electronic device 101 is selected as the device to play audio data according to a user input, the processor may play audio data through the speaker of the electronic device 101.

According to an embodiment of the present disclosure, the processor may display the expanded status bar according to a user input while the operation mode is active, as shown in (b) of FIG. 8D. The processor may display external devices wirelessly connected with the electronic device 101 through the expanded status bar. The processor may display a plurality of external devices to play audio data as the operation mode is activated among the plurality of external devices wirelessly connected in such a manner that the user may notice through the expanded status bar.

As another example, when the operation mode is activated, the processor may display a menu 840 for selecting a device to play audio data among the plurality of connected external devices and the electronic device 101 through the expanded status bar. The processor may change devices to play audio data according to a user input.

As another example, the processor may display a menu 841 for displaying a screen (e.g., the screen shown in FIG. 8A) to set the operation mode and a message 842 to indicate that the operation mode has been activated through the expanded status bar. For example, the processor may display the screen (e.g., the screen shown in FIG. 8A) for setting the operation mode or deactivate the operation mode based on a user input (e.g., a touch or pressed touch) to the menu 841.

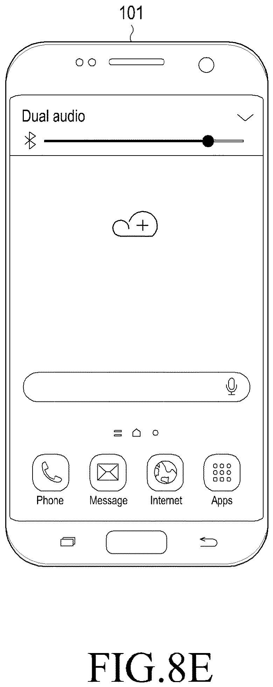

FIG. 8E is a diagram illustrating a volume control screen in a state where an operation mode for transmitting audio data to multiple external devices is activated, which is displayed on an electronic device, according to an embodiment of the present disclosure.

According to an embodiment of the present disclosure, a processor 120 of the electronic device 101 may display a screen for adjusting the volume of audio data transmitted to a plurality of external devices according to a user input for adjusting sound volume while an operation mode for transmitting audio data to the plurality of external devices is active, as shown in FIG. 8E. The processor may simultaneously adjust the sound volume of audio data transmitted to each of the plurality of external devices according to a user input. As another example, the processor may adjust the sound volume of only the audio data transmitted to one of the plurality of external devices according to a user input.

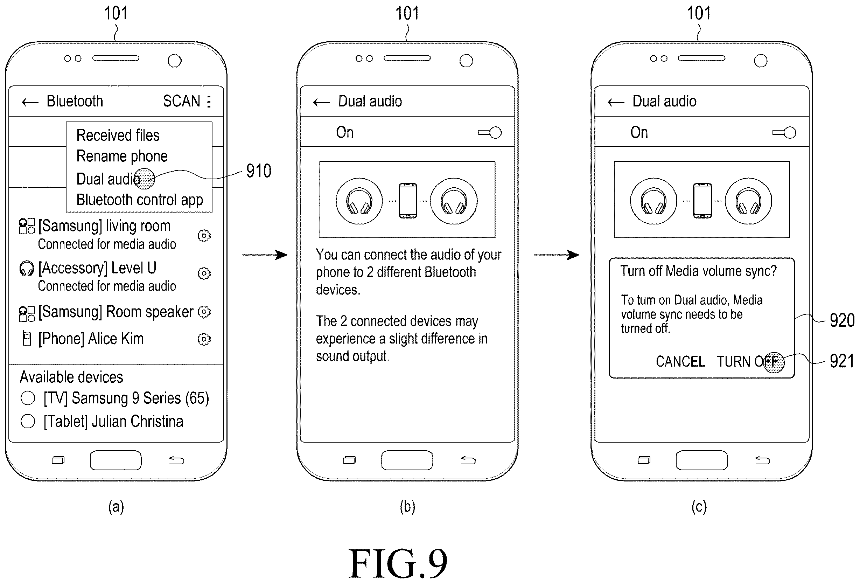

FIG. 9 is a diagram illustrating a method for setting an operation mode for transmitting audio data from an electronic device to multiple external devices, according to an embodiment of the present disclosure.

Referring to (a) of FIG. 9, a processor 120 of the electronic device 101 may display, on a screen for bluetooth connection, a menu including an item for entry into an operation mode configuration screen for transmitting audio data to a plurality of external devices, as shown in FIG. 8A.

For example, upon receipt of a user input 910 for selecting the item from the menu, the processor may display the operation mode configuration screen as shown in (b) of FIG. 9.

According to an embodiment of the present disclosure, the processor may determine whether the plurality of external devices support a media volume synchronization function to determine whether the media volume synchronization function is to be used in the operation mode.

For example, when the media volume synchronization function is used in the operation mode, the processor may fix the volume of the electronic device 101 to the maximum so that the audio data played at the maximum volume fixed may be transmitted to the plurality of external devices. The external devices supporting the media volume synchronization function may control the volume of the playing audio data using the media volume synchronization function. However, the other external devices not supporting the media volume synchronization function cannot control the volume of audio data, so that the volume of the playing audio may be too high.

For example, when at least one of the plurality of external devices fails to support the media volume synchronization function, the processor may abstain from using the media volume synchronization function in the operation mode. In this case, the processor may display a popup window 920 for deactivating the media volume synchronization function to activate the operation mode in the activated state of the media volume synchronization function as shown in (c) of FIG. 9. Upon receipt of a user input 921 to deactivate the media volume synchronization function through the popup window 920, the processor may deactivate the media volume synchronization function and activate the operation mode.

As another example, when all of the plurality of external devices support the media volume synchronization function, the processor may use the media volume synchronization function even in the operation mode. In this case, the processor may abstain from displaying the popup window 920 for deactivating the media volume synchronization function to activate the operation mode even in the activated state of the media volume synchronization function as shown in (c) of FIG. 9. The processor may simultaneously activate the operation mode and the media volume synchronization function.

As another example, even when all of the plurality of external devices support the media volume synchronization function, the processor may abstain from using the media volume synchronization function according to the settings of the electronic device 101 or the plurality of external devices. In this case, the processor may display the popup window 920 to activate the operation mode.

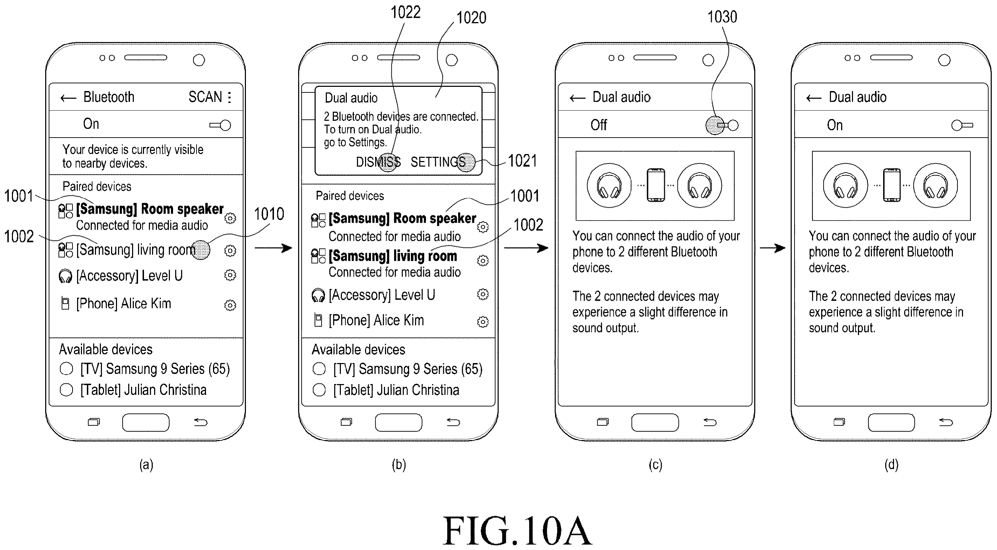

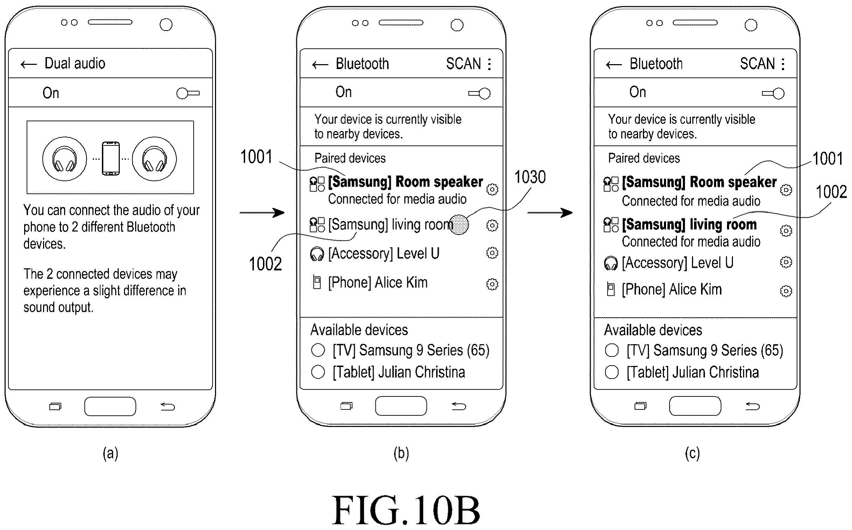

FIGS. 10A and 10B are diagrams illustrating a method for setting an operation mode for transmitting audio data to multiple external devices on an electronic device, according to an embodiment of the present disclosure.

According to an embodiment of the present disclosure, as shown in (a) of FIG. 10A, a processor 120 of the electronic device 101 may display a screen for bluetooth connection. While being in connection with only a first external device 1001, the processor may receive a user input 1010 for connection with a second external device 1002. For example, when the electronic device is connected with the first external device 1001 using a bluetooth profile (e.g., an A2DP) for transmission of audio data, the processor may display text (e.g., "connected for media audio") to indicate that audio data can be transmitted to the first external device 1001, as shown in (a) of FIG. 10A.

As shown in (b) of FIG. 10A, according to a user input 1010, the processor may connect with the second external device 1002 and represent through the screen for bluetooth connection that the electronic device is being connected with the first external device 1001 and the second external device 1002. For example, where the electronic device is connected with the second external device 1002 using a bluetooth profile (e.g., an A2DP) for transmission of audio data, the processor may display text (e.g., "connected for media audio") to indicate that audio data can be transmitted to the second external device 1002, as shown in (b) of FIG. 10A.

Upon sensing connection with the first external device 1001 and the second external device 1002 while the operation mode is not activated, the processor may display a popup window 1020 for entry into an operation mode (e.g., a dual audio mode) configuration screen for transmitting audio data to the plurality of external devices. The popup window 1020 may be displayed only when the processor first senses connection with the plurality of external devices regardless of the bootup of the electronic device 101 or after the electronic device 101 boots up, or whenever it senses connection with the plurality of external devices.

For example, the processor may receive a user input 1021 for entry into the screen for setting the operation mode through the popup window 1020. As another example, the processor, despite not displaying the popup window 1020, may receive a user input for entry into the operation mode configuration screen and display the operation mode configuration screen according to the user input.

As another example, the processor may receive a user input 1022 for abstaining from activating the operation mode through the popup window 1020. In this case, the processor may transmit audio data to one of the first external device 1001 or the second external device 1002. For example, the processor may transmit audio data to the second external device 1002, which is connected later, of the first external device 1001 or the second external device 1002.

The processor may display a screen for setting the operation mode according to a user input 1020, as shown in (c) of FIG. 10A. The processor may receive a user input 1030 to activate the operation mode while the screen is being displayed.

For example, the processor may activate the operation mode according to the user input 1030 and represent that the operation mode is in the activated state through the screen for setting the operation mode as shown in (d) of FIG. 10A. As the operation mode is activated, the processor may select a codec commonly supported by the first external device 1001 and the second external device 1002 to transmit audio data to the first external device 1001 and the second external device 1002.

According to an embodiment of the present disclosure, a processor 120 of the electronic device 101 may display a screen for setting an operation mode (e.g., a dual audio mode) for transmitting audio data to multiple external devices, as shown in (a) of FIG. 10B. For example, the processor may activate the operation mode through the screen even when the electronic device is connected with only one electronic device, e.g., the first external device 1001.

The processor may display a screen for bluetooth connection in the activated state of the operation mode. As shown in (b) of FIG. 10B, the processor may represent the state of being connected with only the first external device 1001 through the screen for bluetooth connection. For example, where the electronic device is connected with the first external device 1001 using a bluetooth profile (e.g., an A2DP) for transmission of audio data, the processor may display text (e.g., "connected for media audio") to indicate that audio data can be transmitted to the first external device 1001, as shown in (b) of FIG. 10B.

For example, while being in connection with only the first external device 100, the processor may receive a user input 1030 for connection with the second external device 1002.

As shown in (c) of FIG. 10B, according to a user input 1030, the processor may connect with the second external device 1002 and represent through the screen for bluetooth connection that the electronic device is being connected with the first external device 1001 and the second external device 1002. For example, where the electronic device is connected with the second external device 1002 using a bluetooth profile (e.g., an A2DP) for transmission of audio data, the processor may display text (e.g., "connected for media audio") to indicate that audio data can be transmitted to the second external device 1002, as shown in (c) of FIG. 10B.

For example, as a connection with the second external device 1002 is made in the activated state of the operation mode, the processor may select a codec commonly supported by the first external device 1001 and the second external device 1002 to transmit audio data to the first external device 1001 and the second external device 1002.

According to an embodiment of the present disclosure, the operation mode setting operation described above in connection with FIGS. 10A and 10B may also be performed by another electronic device (e.g., a smartwatch) wirelessly connected with the electronic device 101. For example, the processor may perform the operation mode setting operation according to a control signal for setting the operation mode that is received from the other electronic device.

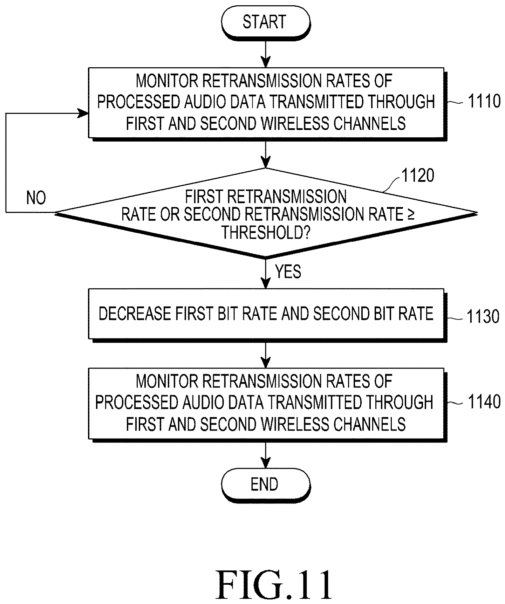

FIG. 11 is a flowchart illustrating a method for reducing the transmission speed of audio data transmitted to multiple external devices by an electronic device, according to an embodiment of the present disclosure.

In operation 1110, a processor 120 of the electronic device 101 monitors retransmission rates of data transmitted to the first external device and the second external device through wireless channels. For example, the processor may monitor a first retransmission rate of audio data processed using a selected codec transmitted through a first wireless channel established with the first external device and a second retransmission rate of audio data processed using the selected codec transmitted through a second wireless channel established with the second external device.

In operation 1120, the processor determines whether the first retransmission rate or the second retransmission rate is greater than or equal to a designated threshold. When the first retransmission rate or the second retransmission rate is greater than or equal to the designated threshold, the processor may determine that the first or second wireless channel is in a poor environment.

When the first retransmission rate and the second retransmission rate are less than the designated threshold, the process returns to operation 1110 to monitor retransmission rates of processed audio data transmitted through first and second wireless channels.

When the first retransmission rate or the second retransmission rate is greater than or equal to the designated threshold, the processor decreases a first bit rate for transmitting the processed audio data through the first wireless channel and a second bit rate for transmitting the processed audio data through the second wireless channel, in operation 1130. For example, the processor may reduce the first bit rate and the second bit rate by increasing the compression rate of the selected codec so that the amount of data transmitted is decreased or changing to a codec with a higher compression rate among codecs commonly supported by the first external device and the second external device in processing the audio data.

For example, the processor may reduce both the first bit rate and the second bit rate, not only when both the first retransmission rate and the second retransmission rate are greater than or equal to the designated threshold, but also when either the first retransmission rate or the second retransmission rate are greater than or equal to the designated threshold.

For example, the processor may reduce the first bit rate and the second bit rate to the same level. Even where either the first retransmission rate or the second retransmission rate is not less than the designated threshold, the processor may reduce both the first bit rate and the second bit rate to the same level.

As another example, the processor may differentially reduce the first bit rate and the second bit rate based on the first retransmission rate and the second retransmission rate. For example, when only the first retransmission rate is greater than or equal to the designated threshold, the processor may reduce the first bit rate to a first bit rate value while reducing the second bit rate to a second bit rate value that is higher than the first bit rate value. The processor may differentially reduce the first bit rate and the second bit rate depending on the environment of the first wireless channel and the second wireless channel, such as, for example, the first retransmission rate and the second retransmission rate.

In operation 1140, after reducing the first bit rate and the second bit rate, the processor monitors the retransmission rate of data transmitted to the first and second external devices through the wireless channels. For example, when the wireless channel environment is determined to be good by monitoring the retransmission rate of data transmitted to the first and second external devices, the processor may increase the first and second bit rates that have been reduced.

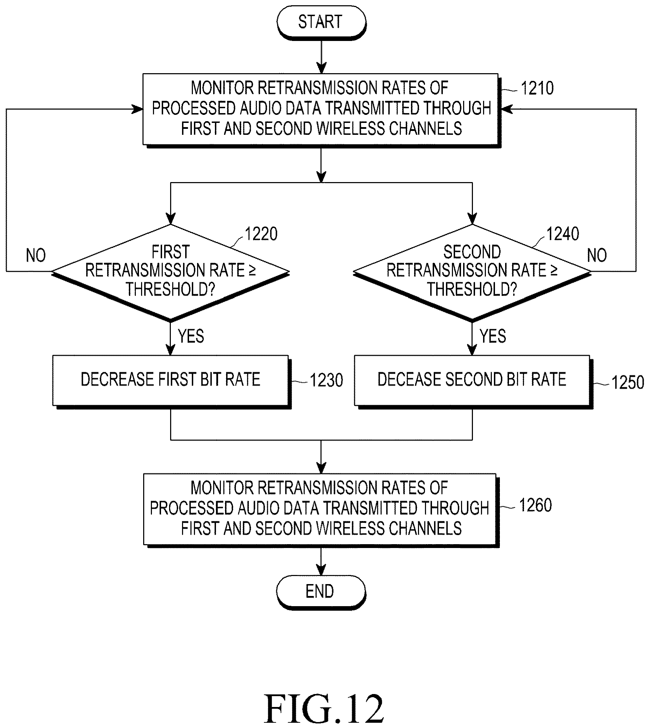

FIG. 12 is a flowchart illustrating a method for reducing the transmission speed of audio data transmitted to one of multiple external devices by an electronic device, according to an embodiment of the present disclosure.

In operation 1210, a processor 120 of the electronic device 101 monitors the retransmission rate of data through a wireless channel. For example, the processor may monitor a first retransmission rate of audio data processed using a selected codec transmitted through a first wireless channel established with the first external device and a second retransmission rate of audio data processed using the selected codec transmitted through a second wireless channel established with the second external device. The processor may determine whether to reduce a first bit rate for transmitting the processed audio data through the first wireless channel or a second bit rate for transmitting the processed audio data through the second wireless channel according to the first retransmission rate or second retransmission rate monitored.

In operation 1220, the processor determines whether the first retransmission rate is greater than or equal to a designated threshold. When the first retransmission rate is greater than or equal to the designated threshold, the processor may determine that the first wireless channel is in a poor environment.

When the first retransmission rate is less than the designated threshold, the process returns to operation 1210 to monitor retransmission rates of processed audio data. When the first retransmission rate is greater than or equal to the designated threshold, the processor reduces the first bit rate, in operation 1230. For example, the processor may reduce the first bit rate by increasing the compression rate of the selected codec in processing audio data to be transmitted to the first external device.

For example, the processor may reduce the first bit rate based on a designated bit rate range in the selected codec. The processor may reduce the first bit rate within the designated bit rate range in the selected codec.

For example, the processor may reduce the first bit rate while fixing the second bit rate. As another example, the processor may increase the second bit rate by the degree to which the first bit rate has been reduced. Sine bluetooth communication is performed within a limited frequency band so that the amount of data transmitted is limited, the sum of the first bit rate and the second bit rate may be below a designated bit rate (about 500kbps). Accordingly, the processor may increase the second bit rate as the first bit rate decreases.

In operation 1240, the processor determines whether the second retransmission rate is greater than or equal to the designated threshold. When the second retransmission rate is greater than or equal to the designated threshold, the processor may determine that the second wireless channel is in a poor environment.

When the second retransmission rate is less than the designated threshold, the process returns to operation 1210 to monitor retransmission rates of processed audio data. When the second retransmission rate is greater than or equal to the designated threshold, the processor reduces the second bit rate, in operation 1250. For example, the processor may reduce the second bit rate by increasing the compression rate of the selected codec in processing audio data to be transmitted to the second external device.

For example, the processor may reduce the second bit rate based on a designated bit rate range in the selected codec. The processor may reduce the second bit rate within the designated bit rate range in the selected codec.

For example, the processor may reduce only the second bit rate while fixing the first bit rate. As another example, the processor may increase the first bit rate by the degree to which the second bit rate has been reduced.

In operation 1260, after reducing the first bit rate or the second bit rate, the processor may monitor the retransmission rate of data transmitted to the first and second external devices through the wireless channels. For example, when the first or second wireless channel environment is determined to be good by monitoring the retransmission rate of data transmitted to the first and second external devices, the processor may increase the first or second bit rate that has been reduced.

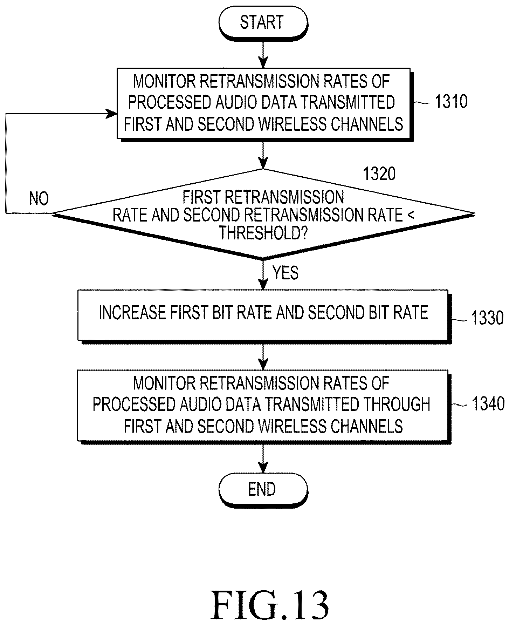

FIG. 13 is a flowchart illustrating a method for increasing the transmission speed of audio data transmitted to multiple external devices by an electronic device, according to an embodiment of the present disclosure.

In operation 1310, a processor 120 of the electronic device 101 monitors a first retransmission rate of audio data processed using a selected codec transmitted through a first wireless channel established with the first external device and a second retransmission rate of audio data processed using the selected codec transmitted through a second wireless channel established with the second external device.

In operation 1320, the processor determines whether the first retransmission rate and the second retransmission rate are less than a designated threshold. When the first retransmission rate and the second retransmission rate are less than the designated threshold, the processor may determine that the first and second wireless channels are in a good environment.

When the first retransmission rate and the second retransmission rate are not less than the designated threshold, the process returns to operation 1310 to monitor retransmission rates of processed audio data. When the first retransmission rate and the second retransmission rate are less than the designated threshold, the processor increases the first bit rate and the second bit rate, in operation 1330. For example, the processor may increase the first and second bit rates within the designated bit rate range in the selected codec. As another example, the processor may increase the first bit rate and the second bit rate so that the sum of the increasing first bit rate and second bit rate are below a designated bit rate (about 500kbps).

For example, the processor may increase the first bit rate and the second bit rate by decreasing the compression rate of the selected codec or changing to a codec with a lower compression rate among codecs commonly supported by the first external device and the second external device in processing the audio data.

For example, where only one of the first retransmission rate and the second retransmission rate is less than the designated threshold, the processor may abstain from increasing the first bit rate and the second bit rate. Bluetooth communication is performed within a limited frequency band. Thus, the retransmission rate remaining high in one channel of the frequency band may influence communication through the other channels. Hence, where only one of the first retransmission rate and the second retransmission rate is less than the designated threshold, the processor may abstain from increasing both the first bit rate and the second bit rate.

In operation 1340, after increasing the first bit rate and the second bit rate, the processor monitors the retransmission rate of data transmitted to the first and second external devices through the wireless channels. For example, when the wireless channel environment is determined to have worsened by monitoring the retransmission rate of data transmitted to the first and second external devices, the processor may decrease the first and second bit rates that have been increased.

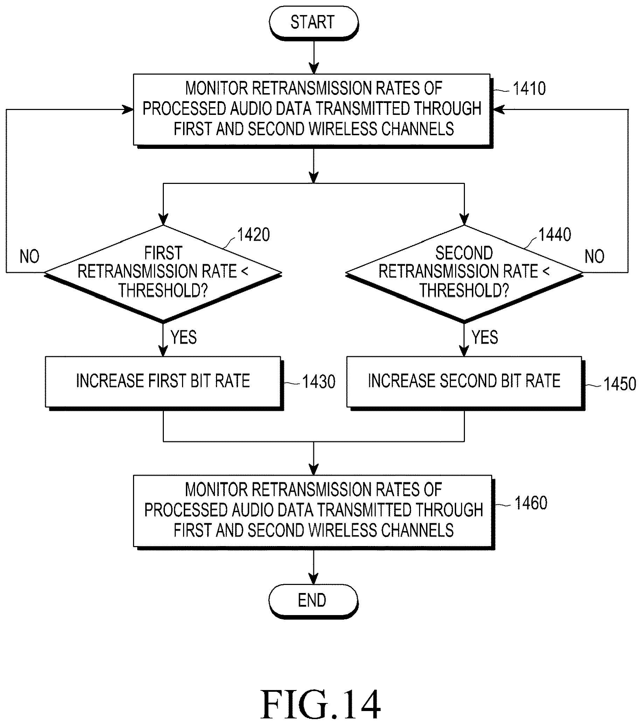

FIG. 14 is a flowchart illustrating a method for increasing the transmission speed of audio data transmitted to one of multiple external devices by an electronic device, according to an embodiment of the present disclosure.

In operation 1410, a processor 120 of the electronic device 101 may monitor a first retransmission rate of audio data processed using a selected codec transmitted through a first wireless channel established with the first external device and a second retransmission rate of audio data processed using the selected codec transmitted through a second wireless channel established with the second external device.

In operation 1420, the processor determines whether the first retransmission rate is less than a designated threshold. Where the first retransmission rate is less than the designated threshold, the processor may determine that the first wireless channel is in a good environment.

When the first retransmission rate is not less than the designated threshold, the process returns to operation 1410 to monitor retransmission rates of processed audio data. When the first retransmission rate is less than the designated threshold, the processor increases the first bit rate, in operation 1430. For example, the processor may increase the first bit rate by reducing the compression rate of the selected codec or changing to a codec with a lower compression rate among codecs commonly supported by the first external device and the second external device in processing the audio data to be transmitted to the first external device.

For example, the processor may increase the first bit rate within the designated bit rate range in the selected codec. The processor may increase the first bit rate so that the sum of the increasing first bit rate and second bit rate are below a designated bit rate (about 500kbps).

As another example, the processor may determine how much it is to increase the first bit rate further considering the second retransmission rate. Bluetooth communication is performed within a limited frequency band. Thus, the retransmission rate remaining high in one channel of the frequency band may influence communication through the other channels. Hence, the processor may take the second retransmission rate into account to increase the first bit rate.

In operation 1440, the processor determines whether the second retransmission rate is less than a designated threshold. Where the second retransmission rate is less than the designated threshold, the processor may determine that the second wireless channel is in a good environment.

When the second retransmission rate is not less than the designated threshold, the process returns to operation 1410 to monitor retransmission rates of processed audio data. When the second retransmission rate is less than the designated threshold, the processor may increase the second bit rate, in operation 1450. For example, the processor may increase the second bit rate by reducing the compression rate of the selected codec or changing to a codec with a lower compression rate among codecs commonly supported by the first external device and the second external device in processing the audio data to be transmitted to the second external device.

For example, the processor may increase the second bit rate within the designated bit rate range in the selected codec. The processor may increase the second bit rate so that the sum of the increasing second bit rate and first bit rate are below a designated bit rate (about 500kbps).

As another example, the processor may determine how much it is to increase the second bit rate further considering the first retransmission rate. Bluetooth communication is performed within a limited frequency band. Thus, the retransmission rate remaining high in one channel of the frequency band may influence communication through the other channels. Hence, the processor may take the first retransmission rate into account to increase the second bit rate.

In operation 1460, after increasing the first bit rate or the second bit rate, the processor monitors the retransmission rate of data transmitted to the first and second external devices through the wireless channels. For example, when the first or second wireless channel environment is determined to have worsened by monitoring the retransmission rate of data transmitted to the first and second external devices, the processor may decrease the first or second bit rate that has been increased.

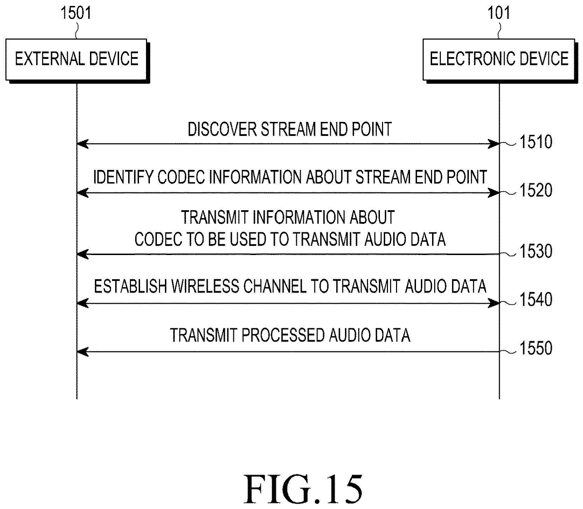

FIG. 15 is a flowchart illustrating a method for establishing a wireless channel with an external device by an electronic device, according to an embodiment of the present disclosure.

In operation 1510, the electronic device 101 discovers at least one stream end point that an external device 1501 supports. For example, when the external device 1501 supports a plurality of codecs, a plurality of stream end points may be provided. For example, when the external device 1501 supports an SBC codec and an aptX codec, two stream end points may be provided.

In operation 1520, the electronic device 101 receives codec information about the at least one stream end point discovered and identifies the codec information about the at least one stream end point. For example, the electronic device 101 may identify the codec information, such as the type and supporting range of codec, about the at least one stream end point based on the received codec information. The electronic device 101 may send a request for the codec to the external device 1501 and receive the codec information. Even when there is no request from the electronic device 101, the external device 1501 may send out the codec information.

In operation 1530, the electronic device 101 transmits information about a codec to be used to transmit audio data to the external device 1501 based on the identified codec information. For example, when a plurality of codecs are supported by the external device 1501, the electronic device 101 may select a codec to be used to transmit audio data to the external device 1501 based on designated priorities and transmit the information about the codec to the first external device 1501.

As another example, operations 1510 to 1530 may be performed by the external device 1501. For example, the external device 1501 may discover at least one stream end point that the electronic device 101 supports. The external device 1501 may receive codec information about the at least one stream end point discovered and identify the codec information about the at least one stream end point. The external device 1501 may transmit information about a codec to be used for transmission of audio data to the electronic device 101 based on the identified codec information, and the electronic device 101 may select a codec to be used to transmit audio data according to the received information.

In operation 1540, the electronic device 101 establishes a wireless channel for transmission of audio data with the external device 1501.

In operation 1550, the electronic device 101 transmits audio data processed (e.g., encoded) using the selected codec to the external device 1501 through the established wireless channel. The external device 1501 may process (e.g., decode) the processed audio data received with the same codec as the selected codec and play the audio data.

As set forth above, in the operation of establishing the wireless channel with the external device 1501, the electronic device 101 may identify the information about at least one codec the external device 1501 supports.

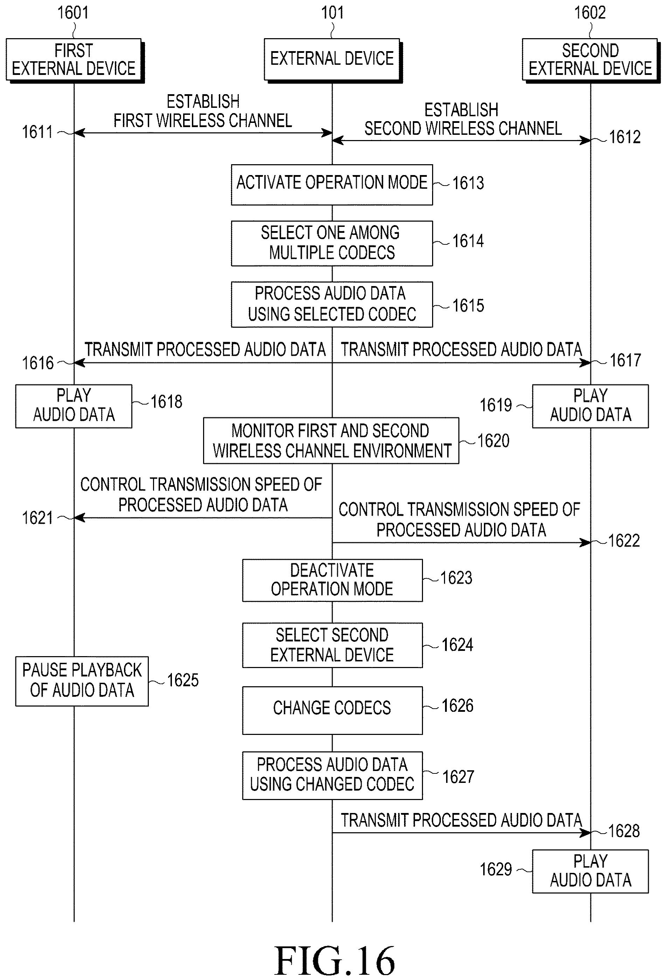

FIG. 16 is a flowchart illustrating a method for transmitting audio data to multiple external devices by an electronic device, according to an embodiment of the present disclosure.

In operation 1611, the electronic device 101 establishes a first wireless channel with a first external device 1601. For example, as shown in FIG. 15, the electronic device 101 may establish the first wireless channel with the first external device 1601.

In operation 1612, the electronic device 101 establishes a second wireless channel with a second external device 1602. For example, as shown in FIG. 15, the electronic device 101 may establish the second wireless channel with the second external device 1602.

In operation 1613, the electronic device 101 activates an operation mode for transmitting audio data to the first and second external devices 1601 and 1602 according to a user input. For example, the operation mode may be activated after the electronic device 101 connects to each of the first external device 1601 and the second external device 1602, as shown, or although not shown, the operation mode may be activated after the electronic device 101 connects with only the first external device 1601. When the operation mode is activated after the electronic device connects with only the first external device 1601, operation 1612 may be performed after operation 1613.

In operation 1614, the electronic device 101 selects a codec that the first and second external devices 1601 and 1602 support among a plurality of codecs stored in the electronic device 101. For example, as the operation mode is activated, the electronic device 101 may select a codec that the first and second external devices 1601 and 1602 support. As another example, the electronic device 101 connects with only the first external device 1601, and as the electronic device 101 connects with the second external device 1602 in the activated state of the operation mode, the electronic device 101 may select a codec that the first and second external devices 1601 and 1602 support.

In operation 1615, the electronic device 101 processes audio data using the selected codec, which is commonly supported by the first and second external devices 1601 and 1602.

In operation 1616, the electronic device 101 transmits the processed audio data through the first wireless channel to the first external device 1601. In operation 1617, the electronic device 101 transmits the processed audio data through the second wireless channel to the second external device 1602.

In operations 1618 and 1619, the first and second external devices 1601 and 1602 process (e.g., decode) the processed audio data with the same codec as the selected codec and play the audio data.

In operation 1620, the electronic device 101 monitors the environment of the first and second wireless channels. For example, the electronic device 101 may monitor the retransmission rate of the processed audio data transmitted through the first and second wireless channels.

In operations 1621 and 1622, the electronic device 101 controls the transmission speed (e.g., bit rate) of the processed audio data according to the results of monitoring. For example, the electronic device 101 may control the transmission speed by controlling the bit rate for transmitting the processed audio data through the first and second wireless channels.

In operation 1623, the electronic device 101 deactivates the operation mode according to a user input.

In operation 1624, the electronic device 101 selects one of the first and second external devices 1601 and 1602 to transmit audio data as the operation mode is deactivated. For example, the electronic device 101 may select the second external device 1602 as the device to transmit audio data according to order of connection with the electronic device 101 between the first and second external devices 1601 and 1602.

In operation 1625, as the second external device 1602 is selected, transmission of audio data to the first external device 1601 pauses, and the first external device 1601 stops playing audio data.

In operation 1626, the electronic device 101 changes codecs for processing (e.g., encoding) audio data based on information about codecs that the selected second external device 1602 supports. For example, where a first codec used to transmit audio data while the operation mode is active differs from a second codec to be used to transmit audio data to the second external device 1602, the electronic device 101 may change codecs for processing audio data. According to an embodiment of the present disclosure, the second codec may be a codec commonly supported by the electronic device 101 and the second external device 1602, and the second codec may be determined based on a priority designated by the electronic device 101 or the second external device 1602.

When the first codec is the same as the second codec, no codec change for processing audio data may be performed.

According to an embodiment of the present disclosure, the electronic device 101 may change codecs for processing audio data using an interval when the playback of audio data pauses to prevent sound drops.

In operation 1627, the electronic device 101 processes (e.g., encodes) audio data using the changed codec. In operation 1628, the electronic device 101 transmits the audio data processed using the changed codec to the second external device 1602. **In** operation 1629, the second external device 1602 processes (e.g., decodes) the processed audio data with the same codec as the changed codec and play the audio data.

According to an embodiment of the present disclosure, an electronic device may comprise a housing, a display provided on the housing, a wireless communication circuit disposed in the housing and configured to support bluetooth-based wireless communication, a processor disposed in the housing and electrically connected with the display and the wireless communication circuit, and a memory disposed in the housing, electrically connected with the processor, and storing a plurality of codecs for processing audio data. The memory may store instructions executed to enable the processor to establish a first wireless channel with a first external device using the wireless communication circuit, establish a second wireless channel with a second external device using the wireless communication circuit, select a codec supported by the first external device and the second external device from among the plurality of codecs, process the audio data using the selected codec, and transmit the processed audio data to the first external device and the second external device through the first wireless channel and the second wireless channel using the wireless communication circuit.

The instructions may enable the processor to receive information about at least one codec supported by each of the first external device and the second external device from the first external device and the second external device.

The instructions may enable the processor to select the one codec supported by the first external device and the second external device from among the plurality of codecs based on the information.

The instructions may enable the processor to select the one codec from among the plurality of codecs supported by the first external device and the second external device based on priorities of the plurality of codecs when two or more of the plurality of codecs are supported by the first external device and the second external device.

The priorities of the plurality of codecs may be designated based on at least one of a compression rate, a degree of loss in sound quality due to compression, whether a bit rate for transmitting audio data is variable by controlling the compression rate, or a perceptual evaluation audio quality (PEAQ) value.

The selected codec may include a low complexity subband coding (SBC) codec.

The instructions may enable the processor to monitor a retransmission rate of the processed audio data through each of the first wireless channel and the second wireless channel and control at least one of a first bit rate for transmitting the processed audio data through the first wireless channel or a second bit rate for transmitting the processed audio data through the second wireless channel based on a result of the monitoring.

The instructions may enable the processor to decrease the first bit rate and the second bit rate when a first retransmission rate monitored of the processed audio data through the first wireless channel or a second retransmission rate of the processed audio data through the second wireless channel is not less than a designated threshold.

The instructions may enable the processor to decrease the first bit rate when a first retransmission rate monitored of the processed audio data through the first wireless channel is not less than a designated threshold.

The instructions may enable the processor to decrease the first bit rate based on a bit rate range designated in the selected codec.

The instructions may enable the processor to select one codec selected by the first external device and the second external device from among the plurality of codecs upon receiving a first user input for activating an operation mode for transmitting the audio data to the first external device and the second external device.

The instructions may enable the processor to select one of the first external device and the second external device upon receiving a second user input for deactivating the operation mode, transmit the audio data processed using one codec supported by the selected external device among the plurality of codecs to the selected external device, and restrict transmission of the processed audio data to one not selected between the first external device and the second external device.

The one codec supported by the selected external device may be a codec used to transmit the audio data to the selected external device before the operation mode is activated among the plurality of codecs.

The instructions may enable the processor to, when an operation mode for transmitting the audio data to the first external device and the second external device is activated, display, through the display, a graphical object for representing the activation of the operation mode.

According to an embodiment of the present disclosure, there may be provided a non-transitory computer-readable recording medium retaining a program executable on a computer, wherein the program may comprise executable commands that, when executed by a processor (e.g., the processor 120), enable the processor to establish a first wireless channel with a first external device, establish a second wireless channel with a second external device, select a codec supported by the first external device and the second external device from among a plurality of codecs for processing audio data, process the audio data using the selected codec, and transmit the processed audio data to the first external device and the second external device through the first wireless channel and the second wireless channel.

Selecting the codec supported by the first external device and the second external device from among the plurality of codecs may include selecting the codec supported by the first external device and the second external device from among the plurality of codecs based on information about at least one codec supported by each of the first external device and the second external device received from the first external device and the second external device.

Selecting the codec supported by the first external device and the second external device from among the plurality of codecs may include selecting the codec supported by the first external device and the second external device from among the plurality of codecs based on priorities of the plurality of codecs when two or more of the plurality of codecs are supported by the first external device and the second external device.

The program may comprise commands executed to enable the processor to monitor a retransmission rate of the processed audio data through the first wireless channel and the second wireless channel and control at least one of a first bit rate for transmitting the processed audio data through the first wireless channel or a second bit rate for transmitting the processed audio data through the second wireless channel based on a result of the monitoring.

Controlling the at least one of the first bit rate or the second bit rate based on the result of the monitoring may include decreasing the first bit rate and the second bit rate when a first retransmission rate monitored of the processed audio data through the first wireless channel or a second retransmission rate of the processed audio data through the second wireless channel is not less than a designated threshold.

According to an embodiment of the present disclosure, an electronic device may comprise a housing, a wireless communication circuit disposed in the housing and configured to support bluetooth-based wireless communication, a processor disposed in the housing and electrically connected with the wireless communication circuit, and a memory disposed in the housing, electrically connected with the processor, and storing a plurality of codecs for processing audio data. The memory may store instructions executed to enable the processor to transmit the audio data processed using a codec selected from among the plurality of codecs through a first wireless channel and a second wireless channel to a first external device and a second external device, monitor a retransmission rate of the processed audio data through each of the first wireless channel and the second wireless channel, and control a bit rate of the audio data transmitted through each of the first wireless channel and the second wireless channel based on a result of the monitoring.

Each of the aforementioned components of the electronic device may include one or more parts, and a name of the part may vary with a type of the electronic device. The electronic device in accordance with various embodiments of the present disclosure may include at least one of the aforementioned components, omit some of them, or include other additional component(s). Some of the components may be combined into an entity, but the entity may perform the same functions as the components may do.

As used herein, the term "module" includes a unit configured in hardware, software, or firmware and may interchangeably be used with other terms, such as, for example, "logic", "logic block", "part", or "circuit." A module may be a single integral part or a minimum unit or part of performing one or more functions. A module may be implemented mechanically or electronically and may include, for example, an application-specific integrated circuit (ASIC) chip, field-programmable gate arrays (FPGAs), or programmable logic device, that has been known or to be developed in the future as performing some operations.

According to an embodiment of the present disclosure, at least a part of the device (e.g., modules or their functions) or method (e.g., operations) may be implemented as instructions stored in a computer-readable storage medium (e.g., the memory 130 of FIG. 1), for example, in the form of a program module. The instructions, when executed by a processor (e.g., the processor 120 of FIG. 1), may enable the processor to carry out a corresponding function.

The computer-readable medium may include, for example, a hard disk, a floppy disc, a magnetic medium (e.g., magnetic tape), an optical recording medium (e.g., compact disc-read only memory (CD-ROM), digital versatile disc (DVD), magnetic-optical medium (e.g., floptical disk), or an embedded memory. The instruction may include a code created by a compiler or a code executable by an interpreter. Modules or programming modules in accordance with various embodiments of the present disclosure may include at least one or more of the aforementioned components, omit some of them, or further include other additional components. Operations performed by modules, programming modules or other components in accordance with various embodiments of the present disclosure may be carried out sequentially, in parallel, repeatedly or heuristically, or at least some operations may be executed in a different order or omitted or other operations may be added.

According to an embodiment of the present disclosure, there may be provided a non-transitory computer-readable recording medium retaining a program executable on a computer, wherein the program may comprise executable commands that, when executed by a processor, enable the processor to establish a first wireless channel with a first external device, establish a second wireless channel with a second external device, select a codec supported by the first external device and the second external device from among a plurality of codecs for processing audio data, process the audio data using the selected codec, and transmit the processed audio data to the first external device and the second external device through the first wireless channel and the second wireless channel.

As is apparent from the foregoing description, according to various embodiments of the present disclosure, an electronic device may select a codec supported by multiple external devices connected via short-range wireless communication and transmit audio data processed using the selected codec to the multiple external devices.

According to various embodiments of the present disclosure, an electronic device may control the transmission speed of audio data transmitted to multiple external devices by monitoring a wireless channel environment established between the electronic device and each of the external devices.

## Claims

1. An electronic device (101; 201), comprising:
a wireless communication circuit (170; 220);
a touchscreen display (160; 260); and
at least one processor (120; 210) configured to:
establish a first short-range wireless channel with a first external device (1601) using the wireless communication circuit,
establish a second short-range wireless channel with a second external device (1602) using the wireless communication circuit,
display, on the touchscreen display, a user interface screen for setting a dual audio function for transmitting audio data to a plurality of external devices, the user interface screen including a first graphical object corresponding to a type of the first external device and a second graphical object corresponding to a type of the second external device, and
during an execution of the dual audio function in which audio data is transmitted to the first external device via the first short-range wireless channel and the second external device via the second short-range wireless channel:
receive a first user input for adjusting a volume commonly for the first external device and the second external device, and
receive a second user input for adjusting a volume for one of the first external device and the second external device while a volume for another of the first external device and the second external device is maintained,
wherein the at least one processor is further configured to select a codec for processing audio data from among a plurality of codecs based on priorities of the plurality of codecs when two or more of the plurality of codecs are supported by both the first external device and the second external device.

2. The electronic device (101; 201) of claim 1,
wherein the processor (120; 210) is further configured to, in response to the first user input, generate audio data according to the commonly adjusted volume and transmit the audio data to the first external device (1601) and the second external device (1602) using the wireless communication circuit.

3. The electronic device (101; 201) of claim 1,
wherein the processor (120; 210) is further configured to, in response to the second user input, generate first audio data according to the adjusted volume and transmit the first audio data to corresponding one of the first external device (1601) and the second external device (1602) using the wireless communication circuit.

4. The electronic device (101; 201) of claim 1,
wherein one of the first graphical object and the second graphical object is configured to indicate that an external device type corresponds to an earphone type wireless device.

5. The electronic device (101; 201) of claim 1,
wherein the at least one processor (120; 210) is further configured to select a codec from among a plurality of codecs upon receiving a third user input for activating the dual audio function.

6. A method for controlling an electronic device (101; 201), comprising:
establishing a first short-range wireless channel with a first external device (1601) using a wireless communication circuit (170; 220) of the electronic device,
establishing a second short-range wireless channel with a second external device (1602) using the wireless communication circuit,
displaying, on a touchscreen display (160; 260) of the electronic device, a user interface screen for setting a dual audio function for transmitting audio data to a plurality of external devices, the user interface screen including a first graphical object corresponding to a type of the first external device and a second graphical object corresponding to a type of the second external device, and
during an execution of the dual audio function in which audio data is transmitted to the first external device via the first short-range wireless channel and the second external device via the second short-range wireless channel:
receiving a first user input for adjusting a volume commonly for the first external device and the second external device, and
receiving a second user input for adjusting a volume for one of the first external device and the second external device while a volume for another of the first external device and the second external device is maintained,
wherein the method further comprises selecting a codec for processing audio data from among a plurality of codecs based on priorities of the plurality of codecs when two or more of the plurality of codecs are supported by both the first external device and the second external device.

7. The method of claim 6,
wherein the method further comprises:
in response to the first user input, generating audio data according to the commonly adjusted volume and transmit the audio data to the first external device (1601) and the second external device (1602) using the wireless communication circuit.

8. The method of claim 6,
wherein the method further comprises:
in response to the second user input, generating first audio data according to the adjusted volume and transmit the first audio data to corresponding one of the first external device (1601) and the second external device (1602) using the wireless communication circuit.

9. The method of claim 6,
wherein one of the first graphical object and the second graphical object is configured to indicate that an external device type corresponds to an earphone type wireless device.

10. The method of claim 6,
wherein the method further comprises:
in response to an execution of the dual audio function, reducing a bit rate at which audio data is transmitted to the first external device (1601) and the second external device (1602).

11. The method of claim 6,
wherein the method further comprises:
selecting a codec from among a plurality of codecs upon receiving a third user input for activating the dual audio function.

## Patentansprüche

1. Elektronische Vorrichtung (101; 201), umfassend:
eine drahtlose Kommunikationsschaltung (170; 220);
eine Touchscreen-Anzeige (160; 260); und
mindestens einen Prozessor (120; 210), der zu Folgendem konfiguriert ist:
Einrichten eines ersten drahtlosen Kurzstreckenkanals mit einer ersten externen Vorrichtung (1601) unter Verwendung der drahtlosen Kommunikationsschaltung,
Einrichten eines zweiten drahtlosen Kurzstreckenkanals mit einer zweiten externen Vorrichtung (1602) unter Verwendung der drahtlosen Kommunikationsschaltung,
Anzeigen eines Benutzeroberflächenbildschirms auf der Touchscreen-Anzeige zum Festlegen einer Dual-Audio-Funktion zum Übertragen von Audiodaten an eine Vielzahl von externen Vorrichtungen, wobei der Benutzeroberflächenbildschirm ein erstes grafisches Objekt, das einer Art der ersten externen Vorrichtung entspricht, und ein zweites grafisches Objekt, das einer Art der zweiten externen Vorrichtung entspricht, beinhaltet, und
während einer Ausführung der Dual-Audio-Funktion, bei der Audiodaten über den ersten drahtlosen Kurzstreckenkanal an die erste externe Vorrichtung und über den zweiten drahtlosen Kurzstreckenkanal an die zweite externe Vorrichtung übertragen werden:
Empfangen einer ersten Benutzereingabe zum gemeinsamen Einstellen einer Lautstärke für die erste externe Vorrichtung und die zweite externe Vorrichtung und
Empfangen einer zweite Benutzereingabe zum Einstellen einer Lautstärke für eine von der ersten externen Vorrichtung und der zweiten externen Vorrichtung, während eine Lautstärke für eine andere von der ersten externen Vorrichtung und der zweiten externen Vorrichtung beibehalten wird,
wobei der mindestens eine Prozessor ferner dazu konfiguriert ist, einen Codec, der Audiodaten verarbeitet, aus einer Vielzahl von Codecs auf Grundlage von Prioritäten der Vielzahl von Codecs auszuwählen, wenn zwei oder mehr der Vielzahl von Codecs sowohl von der ersten externen Vorrichtung als auch von der zweiten externen Vorrichtung unterstützt werden.

2. Elektronische Vorrichtung (101; 201) nach Anspruch 1,
wobei der Prozessor (120; 210) ferner dazu konfiguriert ist, als Reaktion auf die erste Benutzereingabe Audiodaten entsprechend der gemeinsam eingestellten Lautstärke zu generieren und die Audiodaten unter Verwendung der drahtlosen Kommunikationsschaltung an die erste externe Vorrichtung (1601) und die zweite externe Vorrichtung (1602) zu übertragen.

3. Elektronische Vorrichtung (101; 201) nach Anspruch 1,
wobei der Prozessor (120; 210) ferner dazu konfiguriert ist, als Reaktion auf die zweite Benutzereingabe erste Audiodaten entsprechend der eingestellten Lautstärke zu generieren und die ersten Audiodaten unter Verwendung der drahtlosen Kommunikationsschaltung an eine entsprechende von der ersten externen Vorrichtung (1601) und der zweiten externen Vorrichtung (1602) zu übertragen.

4. Elektronische Vorrichtung (101; 201) nach Anspruch 1,
wobei eines von dem ersten grafischen Objekt und dem zweiten grafischen Objekt dazu konfiguriert ist, anzugeben, dass eine externe Vorrichtungsart einer drahtlosen Vorrichtung von der Art eines Kopfhörers entspricht.

5. Elektronische Vorrichtung (101; 201) nach Anspruch 1,
wobei der mindestens eine Prozessor (120; 210) ferner dazu konfiguriert ist, einen Codec aus einer Vielzahl von Codecs beim Empfangen einer dritten Benutzereingabe zum Aktivieren der Dual-Audio-Funktion auszuwählen.

6. Verfahren zum Steuern einer elektronischen Vorrichtung (101; 201), umfassend:
Einrichten eines ersten drahtlosen Kurzstreckenkanals mit einer ersten externen Vorrichtung (1601) unter Verwendung einer drahtlosen Kommunikationsschaltung (170; 220) der elektronischen Vorrichtung,
Einrichten eines zweiten drahtlosen Kurzstreckenkanals mit einer zweiten externen Vorrichtung (1602) unter Verwendung der drahtlosen Kommunikationsschaltung,
Anzeigen eines Benutzeroberflächenbildschirms auf einer Touchscreen-Anzeige (160; 260) der elektrischen Vorrichtung zum Festlegen einer Dual-Audio-Funktion zum Übertragen von Audiodaten an eine Vielzahl von externen Vorrichtungen, wobei der Benutzeroberflächenbildschirm ein erstes grafisches Objekt, das einer Art der ersten externen Vorrichtung entspricht, und ein zweites grafisches Objekt, das einer Art der zweiten externen Vorrichtung entspricht, beinhaltet, und
während einer Ausführung der Dual-Audio-Funktion, bei der Audiodaten über den ersten drahtlosen Kurzstreckenkanal an die erste externe Vorrichtung und über den zweiten drahtlosen Kurzstreckenkanal an die zweite externe Vorrichtung übertragen werden:
Empfangen einer ersten Benutzereingabe zum gemeinsamen Einstellen einer Lautstärke für die erste externe Vorrichtung und die zweite externe Vorrichtung und
Empfangen einer zweite Benutzereingabe zum Einstellen einer Lautstärke für eine von der ersten externen Vorrichtung und der zweiten externen Vorrichtung, während eine Lautstärke für eine andere von der ersten externen Vorrichtung und der zweiten externen Vorrichtung beibehalten wird,
wobei das Verfahren ferner Auswählen eines Codecs zum Verarbeiten von Audiodaten aus einer Vielzahl von Codecs auf Grundlage von Prioritäten der Vielzahl von Codecs umfasst, wenn zwei oder mehr der Vielzahl von Codecs sowohl von der ersten externen Vorrichtung als auch von der zweiten externen Vorrichtung unterstützt werden.

7. Verfahren nach Anspruch 6,
wobei das Verfahren ferner Folgendes umfasst:
als Reaktion auf die erste Benutzereingabe, Generieren von Audiodaten entsprechend der gemeinsam eingestellten Lautstärke und Übertragen der Audiodaten an die erste externe Vorrichtung (1601) und die zweite externe Vorrichtung (1602) unter Verwendung der drahtlosen Kommunikationsschaltung.

8. Verfahren nach Anspruch 6,
wobei das Verfahren ferner Folgendes umfasst:
als Reaktion auf die zweite Benutzereingabe, Generieren erster Audiodaten entsprechend der eingestellten Lautstärke und Übertragen der ersten Audiodaten unter Verwendung der drahtlosen Kommunikationsschaltung an eine entsprechende von der ersten externen Vorrichtung (1601) und der zweiten externen Vorrichtung (1602).

9. Verfahren nach Anspruch 6,
wobei eines von dem ersten grafischen Objekt und dem zweiten grafischen Objekt dazu konfiguriert ist, anzugeben, dass eine externe Vorrichtungsart einer drahtlosen Vorrichtung von der Art eines Kopfhörers entspricht.

10. Verfahren nach Anspruch 6,
wobei das Verfahren ferner Folgendes umfasst:
Reduzieren einer Bitrate, mit der Audiodaten an die erste externe Vorrichtung (1601) und die zweite externe Vorrichtung (1602) übertragen werden, als Reaktion auf eine Ausführung der Dual-Audio-Funktion.

11. Verfahren nach Anspruch 6,
wobei das Verfahren ferner Folgendes umfasst:
Auswählen eines Codecs aus einer Vielzahl von Codecs beim Empfangen einer dritten Benutzereingabe zum Aktivieren der Dual-Audio-Funktion.

## Revendications

1. Dispositif électronique (101 ; 201) comprenant :
un circuit de communication sans fil (170 ; 220) ;
un dispositif d'affichage à écran tactile (160 ; 260) ; et
au moins un processeur (120 ; 210) configuré pour :
établir un premier canal sans fil à courte portée avec un premier dispositif externe (1601) à l'aide du circuit de communication sans fil,
établir un second canal sans fil à courte portée avec un second dispositif externe (1602) à l'aide du circuit de communication sans fil,
afficher, sur le dispositif d'affichage tactile, un écran d'interface utilisateur pour définir une double fonction audio en vue de la transmission de données audio à une pluralité de dispositifs externes, l'écran d'interface utilisateur comprenant un premier objet graphique correspondant à un type du premier dispositif externe et un second objet graphique correspondant à un type du seconde dispositif externe, et
durant une exécution de la double fonction audio dans laquelle des données audio sont transmises au premier dispositif externe par l'intermédiaire du premier canal sans fil à courte portée et au second dispositif externe par l'intermédiaire du second canal sans fil à courte portée :
recevoir une première entrée utilisateur pour régler un volume de manière commune pour le premier dispositif externe et le second dispositif externe, et
recevoir une deuxième entrée d'utilisateur pour régler un volume pour l'un du premier dispositif externe et du second dispositif externe pendant qu'un volume pour l'autre du premier dispositif externe et du second dispositif externe est maintenu,
ledit au moins un processeur étant en outre configuré pour sélectionner un codec
pour traiter des données audio parmi une pluralité de codecs sur la base des priorités de la pluralité de codecs lorsque deux, ou plus, de la pluralité de codecs sont pris en charge à la fois par le premier dispositif externe et le second dispositif externe.

2. Dispositif électronique (101 ; 201) de la revendication 1,
ledit processeur (120 ; 210) étant en outre configuré pour, en réponse à la première entrée d'utilisateur, générer des données audio selon le volume réglé de manière commune et transmettre les données audio au premier dispositif externe (1601) et au second dispositif externe (1602) à l'aide du circuit de communication sans fil.

3. Dispositif électronique (101 ; 201) de la revendication 1,
ledit processeur (120 ; 210) étant en outre configuré pour, en réponse à la deuxième entrée utilisateur, générer des premières données audio selon le volume réglé et transmettre les premières données audio à l'un correspondant du premier dispositif externe (1601) et du second dispositif externe (1602) à l'aide du circuit de communication sans fil.

4. Dispositif électronique (101 ; 201) de la revendication 1,
l'un du premier objet graphique et du second objet graphique étant configuré pour indiquer qu'un type de dispositif externe correspond à un dispositif sans fil de type écouteur.

5. Dispositif électronique (101 ; 201) de la revendication 1,
ledit au moins un processeur (120 ; 210) étant en outre configuré pour sélectionner un codec parmi une pluralité de codecs lors de la réception d'une troisième entrée utilisateur pour activer la double fonction audio.

6. Procédé permettant de commander un dispositif électronique (101 ; 201) comprenant :
l'établissement d'un premier canal sans fil à courte portée avec un premier dispositif externe (1601) à l'aide d'un circuit de communication sans fil (170 ; 220) du dispositif électronique,
l'établissement d'un second canal sans fil à courte portée avec un second dispositif externe (1602) à l'aide du circuit de communication sans fil,
l'affichage, sur un dispositif d'affichage tactile (160 ; 260) du dispositif électronique, d'un écran d'interface utilisateur pour définir une double fonction audio en vue de la transmission de données audio à une pluralité de dispositifs externes, l'écran d'interface utilisateur comprenant un premier objet graphique correspondant à un type du premier dispositif externe et un second objet graphique correspondant à un type du second dispositif externe, et
durant une exécution de la double fonction audio dans laquelle des données audio sont transmises au premier dispositif externe par l'intermédiaire du premier canal sans fil à courte portée et au second dispositif externe par l'intermédiaire du second canal sans fil à courte portée :
la réception d'une première entrée utilisateur pour régler un volume de manière commune pour le premier dispositif externe et le second dispositif externe, et
la réception d'une deuxième entrée d'utilisateur pour régler un volume pour l'un du premier dispositif externe et du second dispositif externe pendant qu'un volume pour l'autre du premier dispositif externe et du second dispositif externe est maintenu,
ledit procédé comprenant en outre la sélection d'un codec pour traiter des données audio parmi une pluralité de codecs sur la base des priorités de la pluralité de codecs lorsque deux, ou plus, de la pluralité de codecs sont pris en charge à la fois par le premier dispositif externe et le second dispositif externe.

7. Procédé de la revendication 6,
ledit procédé comprenant en outre :
en réponse à la première entrée d'utilisateur, la génération de données audio selon le volume réglé de manière commune et la transmission des données audio au premier dispositif externe (1601) et au second dispositif externe (1602) à l'aide du circuit de communication sans fil.

8. Procédé de la revendication 6,
ledit procédé comprenant en outre :
en réponse à la deuxième entrée utilisateur, la génération des premières données audio selon le volume réglé et la transmission des premières données audio à l'un correspondant du premier dispositif externe (1601) et du second dispositif externe (1602) à l'aide du circuit de communication sans fil.

9. Procédé de la revendication 6,
l'un du premier objet graphique et du second objet graphique étant configuré pour indiquer qu'un type de dispositif externe correspond à un dispositif sans fil de type écouteur.

10. Procédé de la revendication 6,
ledit procédé comprenant en outre :
en réponse à une exécution de la double fonction audio, la réduction d'un débit binaire auquel des données audio sont transmises au premier dispositif externe (1601) et au second dispositif externe (1602).

11. Procédé de la revendication 6,
ledit procédé comprenant en outre :
la sélection d'un codec parmi une pluralité de codecs lors de la réception d'une troisième entrée utilisateur pour activer la double fonction audio.
